(19) Europäisches Patentamt / European Patent Office / Office européen des brevets

(11) **EP 3 106 751 B1**

(12) **EUROPEAN PATENT SPECIFICATION**

(45) Date of publication and mention
of the grant of the patent:
**15.08.2018 Bulletin 2018/33**

(51) Int Cl.:
*F23K 5/12* (2006.01)   *C10L 1/32* (2006.01)
*F23K 5/14* (2006.01)   *F02M 25/022* (2006.01)

(21) Application number: **15810835.7**

(22) Date of filing: **23.06.2015**

(86) International application number:
**PCT/JP2015/068052**

(87) International publication number:
**WO 2015/199075 (30.12.2015 Gazette 2015/52)**

(54) **DEVICE FOR SUPPLYING EMULSIFIED FUEL AND METHOD FOR SUPPLYING SAID FUEL**

VORRICHTUNG ZUR ZUFUHR EINES EMULGIERTEN KRAFTSTOFFES UND VERFAHREN ZUR ZUFÜHRUNG DIESES KRAFTSTOFFES

DISPOSITIF D'ALIMENTATION EN CARBURANT ÉMULSIONNÉ ET PROCÉDÉ D'ALIMENTATION EN LEDIT CARBURANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2014 JP 2014128944**
**15.07.2014 JP 2014145254**

(43) Date of publication of application:
**21.12.2016 Bulletin 2016/51**

(73) Proprietor: **Fukai, Toshiharu**
**Nagano 386-0002 (JP)**

(72) Inventor: **Fukai, Toshiharu**
**Nagano 386-0002 (JP)**

(74) Representative: **Grünecker Patent- und**
**Rechtsanwälte**
**PartG mbB**
**Leopoldstraße 4**
**80802 München (DE)**

(56) References cited:
**WO-A1-2009/014147   WO-A1-2010/047343**
**DE-A1- 2 230 071   GB-A- 2 358 434**
**JP-A- S 555 306   JP-A- S5 520 356**
**JP-A- S53 148 040   JP-A- 2003 083 508**
**JP-A- 2008 063 355   JP-A- 2009 079 149**
**JP-A- 2009 215 524   JP-A- 2010 025 522**
**JP-A- 2010 025 522   JP-A- 2011 122 035**
**JP-A- 2012 036 342   JP-A- 2012 036 342**
**JP-U- S51 102 833   US-A- 4 352 572**
**US-B1- 6 211 253**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention is related to an emulsion fuel supply device for supplying an emulsion fuel obtained by emulsifying a fuel oil and water to a combustion apparatus and a supply method of the same.

BACKGROUND ART

It is conventionally known that an emulsion fuel obtained by mixing water, a fuel oil, such as gasoline, light oil, kerosene, heavy oil, vegetable oil, and waste oil, and an emulsifier produces little nitrogen oxide (NOX) and soot in combustion, thus being an effective fuel for preventing air pollution. Further, since the fuel is mixed with water, a ratio of the fuel fed to a combustion apparatus drops by a mixing amount of the water, which, in theory, can cause a reduction of fuel cost.

Therefore, various methods of producing an emulsion fuel and supply devices to a combustion apparatus have been proposed (e.g., Patent Document 1).

Patent Document 1 discloses an emulsion fuel system including a fuel oil tank for storing a fuel oil, a water tank for storing water, an emulsion generation unit for producing an emulsion fuel substantially composed of the fuel oil and water from the fuel oil supplied from the fuel oil tank and the water supplied from the water tank, and a power generator in which the emulsion fuel produced in the emulsion generation unit is introduced and burned. The emulsion generation unit has two or more emulsion generation devices that produce the emulsion fuel from the fuel oil and the water, and the emulsion fuel is produced in at least one of the two or more emulsion generation devices using the fuel oil supplied from the fuel oil tank and the water supplied from the water tank. The power generator is driven by burning the emulsion fuel continuously produced in the emulsion generation unit.

According to the emulsion fuel system of Patent Document 1, the emulsion fuel can be produced without using an emulsifier, and a production quantity of the emulsion fuel can be changed as necessary without the need for storing the produced emulsion fuel and without increasing pressure loss of the system.

CITATION LIST

PATENT DOCUMENT

PATENT DOCUMENT 1: JP 2011-122035 A

SUMMARY OF INVENTION

TECHNICAL PROBLEM

However, the invention of Patent Document 1 uses water not applied with a special treatment, thus energy efficiency of the produced emulsion fuel is low and energy obtained from the power generator is reduced by an amount corresponding to a mixture ratio of the water. As such, there is little merit in using the emulsion fuel instead of the fuel oil. Furthermore, because the produced emulsion fuel has low energy efficiency, the operation of the power generator is not stabilized and a misfire occurs in the power generator, thereby easily causing engine stalling.

Further, in the invention of Patent Document 1, in order to control a fluctuation of loads on the power generator caused by lack of an emulsifier, a plurality of the emulsion generation devices are connected in parallel and the number of the emulsion generation devices in operation is suitably increased or decreased corresponding to the loads of the power generator. This requires, in each of the emulsion generation devices, a valve for switching between use and disuse and a discarding pipe for discarding a mixture of a fuel and water subjected to an oil-water separation treatment inside of the emulsion generation devices of which operation is temporarily suspended, thus making a device configuration complicated.

Among emulsion fuel supply devices in which no emulsifier is added, there is no known device that is capable of stably driving a combustion apparatus, and yet having a simple device configuration.

The present invention was made in view of the problems described above, and it is an object thereof to provide an emulsion fuel supply device capable of stably driving a combustion apparatus with a simple device configuration, and a supply method thereof.

Another object of the present invention is to provide an emulsion fuel supply device capable of supplying an emulsifier-free emulsion fuel that has high combustion efficiency in a combustion apparatus, and a supply method thereof.

SOLUTION TO PROBLEM

The problems described above can be solved according to an emulsion fuel supply device according to claim 1. The device is for supplying an emulsion fuel having an aqueous phase and an oil phase of a fuel oil to a combustion apparatus and includes: a processed water generation device for producing processed water by removing, from raw water, Ca ions and Mg ions contained in the raw water and allowing to remain or adding Na ions in the raw water; a tank for storing the processed water supplied from the processed water generation device and the fuel oil; a merging section for merging the fuel oil supplied from the tank and the processed water supplied from the tank at a predetermined flow rate ratio; an emulsion generation section for producing the emulsion fuel from a mixture of the fuel oil and the processed water merged by the merging section; and a supply section for supplying the emulsion fuel produced by the emulsion generation section to the combustion apparatus.

In this manner, a raw material of the emulsion fuel in use is the processed water produced by removing, from raw water, Ca ions and Mg ions contained in the raw water and allowing to remain or adding Na ions in the raw water, thus the emulsion fuel can be produced by using the processed water containing highly active atomic hydrogen, making it possible to supply the emulsion fuel of high energy efficiency.

Further, using the processed water makes it possible to perform emulsification with the fuel oil without using an emulsifier, thus an emulsifier-free emulsion fuel can be achieved.

Moreover, the emulsion fuel of the present invention uses the processed water made of soft water from which Ca ions and Mg ions are removed as a raw material, and also does not contain an emulsifier, thus oxidation, rust and corrosion in a combustion apparatus can be suppressed and the deterioration of a combustion apparatus caused by the emulsion fuel can be suppressed.

In this configuration, the tank may be a single tank storing the processed water and the fuel oil, including a water supply pipe having a liquid suction port arranged near a bottom part of the tank and an oil supply pipe having a liquid suction port attached on a float floating on the surface of a liquid stored in the tank, and the merging section may alternately perform a supply of the processed water from the water supply pipe and a supply of the fuel oil from the oil supply pipe to merge the fuel oil and the processed water.

With such a configuration, it is not necessary to prepare a plurality of tanks for the processed water and the fuel oil, making a device configuration simple. As such, it is not necessary to add a new tank for the processed water to the existing fuel supply device, making it easy to introduce the emulsion fuel supply device of the present invention.

In this configuration, the tank may include a water tank for storing the processed water supplied from the processed water generation device and a fuel oil tank for storing the fuel oil, formed as a separate part from the water tank, and include an in-tank liquid height adjusting device for adjusting the difference between the height from a bottom surface of the fuel oil tank to a liquid surface of the fuel oil and the height from a bottom surface of the water tank to a water surface of the processed water to be within a predetermined range. Then, the merging section may merge the fuel oil supplied from the fuel oil tank and the processed water supplied from the water tank with a predetermined flow rate ratio.

In this manner, there are provided the fuel oil tank for storing the fuel oil, the water tank for storing the water, and the in-tank liquid height adjusting device for adjusting the difference between the height from a bottom surface of the fuel oil tank to a liquid surface of the fuel oil and the height from a bottom surface of the water tank to a water surface of the water to be within a predetermined range, thus it becomes possible to merge the fuel oil supplied from the fuel oil tank and the water supplied from the water tank with a desired flow rate ratio by the merging section.

Specifically, if the relation between the liquid height in the fuel oil tank and the liquid height in the water tank is not adjusted, there is seen such a phenomenon that only one liquid having higher liquid height at that point of time is supplied to the merging section at a place where the fuel oil and the water are merged, while the other liquid is hardly supplied. However, since the present invention is provided with the in-tank liquid height adjusting device, it becomes possible to control a merging ratio between the fuel oil and the water by the merging section.

In this configuration, the water tank and the fuel tank may be arranged at a position higher than the combustion apparatus, and supply passages of the processed water and the fuel oil from the water tank and the fuel oil tank to the emulsion generation section may be a pump-less passage without having a pump. Then, the fuel oil and the processed water may be supplied to the emulsion generation section by gravity caused by the height difference between the water tank and the fuel oil tank, and the combustion apparatus, and pressure caused by a pump provided in the combustion apparatus.

In this manner, the supply passages of the processed water and the fuel oil are not provided with a pump, thus a low-cost emulsion fuel supply device having a simple device configuration can be realized. Since a purpose of using an emulsion fuel is cost reduction, realization of a low-cost emulsion fuel supply device also meets the rationale of adopting an emulsion fuel.

Further, if a pump for supplying the processed water and the fuel is separately installed, it requires a pressure-control valve and a pressure-control system using a computer in order to take a pressure balance between this pump and the pump in the combustion apparatus. However, in the present invention, the supply passages of the processed water and the fuel are not provided with a pump, thus there is no need to separately install a control system for taking a balance between the pumps, and a low-cost emulsion fuel supply device having a simple device configuration can be achieved.

In the present invention, as raw material water of the emulsion fuel, the processed water in use is produced by removing Ca ions and Mg ions from the raw water and allowing to remain or adding Na ions in the raw water, thus as long as the water tank and the oil tank are arranged at a position higher than the combustion apparatus, supplies of the processed water and the fuel can be performed smoothly and stably without a pump being installed on the supply passages of the processed water and the fuel.

In this configuration, the emulsion generation section may include a plurality of dispersion parts each having fine hole parts including a through-hole with small diameter and a cylindrical large-diameter part continuously installed downstream of the fine hole parts, the plurality of the dispersion parts being continuously connected to each other in series, and an introduction port for returning surplus fuel discharged from the combustion apparatus to the emulsion generation section, the introduction port being installed on a downstream side of the most upstream fine hole parts.

With such a configuration, the surplus fuel is prevented from being subjected to an excessive dispersion treatment, and the emulsion fuel supplied to the combustion apparatus can be kept in an incomplete emulsion state, where the emulsion fuel is not completely emulsified.

The inventors of the present invention have found, as a result of their earnest study, that combustion efficiency is decreased in a combustion apparatus when an emulsion fuel is brought into a complete emulsion state, where an aqueous phase and an oil phase are completely emulsified. Therefore, the present invention has a such configuration that the introduction port for returning the surplus fuel to the emulsion generation section is arranged on the downstream side of the most upstream fine hole parts, thereby preventing conversion of the emulsion fuel supplied to the combustion apparatus into complete emulsion and making it possible to supply the emulsion fuel of excellent combustion efficiency.

In this configuration, the processed water generation device preferably includes: a soft water generation device for producing soft water from raw water, having an ion exchanger for removing Ca ions, Mg ions, and Fe ions from the raw water and also adding Na ions to the raw water, a tourmaline container for storing tourmaline, and an obsidian container for storing obsidian; a surface tension increasing section for increasing surface tension of the soft water and also increasing a quantity of atomic hydrogen in the soft water, having an introduction pipe for introducing the soft water produced in the soft water generation device and a circulation device for circulating the soft water introduced from the introduction pipe into at least one of the tourmaline container and the obsidian container for 30 minutes or more; and a processed water supply section for supplying processed water having passed through the surface tension increasing section to the water tank.

In this manner, the surface tension increasing section is provided, thus the emulsion fuel can be produced by using the processed water having high surface tension and the emulsion fuel of high energy efficiency can be supplied.

In this configuration, an air suction port of the combustion apparatus is preferably connected to a gas supply quantity adjusting section for adjusting a supply quantity of gas to the combustion apparatus within a range of zero to a misfiring air quantity as fuel oil being supplied, beyond which a misfire is caused when a water-free fuel oil is supplied, and an oxygen gas supply section for supplying oxygen gas.

In this manner, the gas supply quantity adjusting section is provided, thus the combustion apparatus can be efficiently operated. In the step of the processed water generation device of the present invention, atomic hydrogen as an energy source and also oxygen are produced, thus when the processed water supplied from the processed water generation device is used for the emulsion fuel, in principle, a supply of oxygen and the air in the combustion apparatus becomes unnecessary.

On the other hand, there is provided the oxygen gas supply section, thus even when a ratio of water in the emulsion fuel is increased, a misfire in the combustion apparatus can be suppressed. As a result, it becomes possible to increase a ratio of water in the emulsion fuel, thereby reducing a ratio of the fuel oil, so that operation cost of the combustion apparatus can be reduced.

In this configuration, the fine hole parts are preferably inclined relative to an extended direction of the emulsion generation section.

With such a configuration, a fluid is jetted from the fine hole parts to the large-diameter part in an oblique direction and collides against a wall face and the like of the large-diameter part, whereby diffusion of the liquid is further promoted.

The problems described above can be solved according to an emulsion fuel supply method according to claim 9. The method is for supplying an emulsion fuel having an aqueous phase and an oil phase of a fuel oil to a combustion apparatus and includes: a processed water generation step for producing processed water by removing, from raw water, Ca ions and Mg ions contained in the raw water and allowing to remain or adding Na ions in the raw water; a merging step for merging the fuel oil supplied from a tank storing the processed water produced in the processed water generation step and the fuel oil, and the processed water supplied from the tank in a predetermined flow rate ratio; an emulsion generation step for producing the emulsion fuel by supplying a mixture of the fuel oil and the processed water merged in the merging step to an emulsion generation section; and a supply step for supplying the emulsion fuel produced in the emulsion generation step to the combustion apparatus.

In the merging step of this method, the processed water and the fuel oil may be merged by alternately performing a supply from a water supply pipe having a suction port arranged near a bottom part of the tank and a supply from an oil supply pipe having a suction port attached on a float floating on the surface of a liquid stored in the tank.

Further, before the merging step, there may be included an in-tank liquid height adjusting step for adjusting the difference between the height from a bottom surface of the water tank storing the processed water supplied after being produced in the processed water generation step to a water surface of the processed water, and the height from a bottom surface of the fuel oil tank storing the fuel oil to a liquid surface of the fuel oil, to be within a predetermined range. Then, in the merging step, the fuel oil supplied from the fuel oil tank and the processed water supplied from the water tank may be merged at a predetermined flow rate ratio.

In the merging step and the emulsion generation step, the fuel oil and the processed water may be supplied to the emulsion generation section by gravity caused by the height difference between the water tank and the fuel oil tank arranged at a position higher than that of the combustion apparatus, and the combustion apparatus, and pressure caused by a pump provided in the combustion apparatus.

Further, in the emulsion generation step, a mixture of the fuel oil and the processed water merged in the merging step may be allowed to pass through the emulsion generation section including a plurality of dispersion parts each having fine hole parts including a through-hole with small diameter and a cylindrical large-diameter part continuously installed downstream of the fine hole parts, the plurality of the dispersion parts being continuously connected to each other in series. Also, surplus fuel discharged from the combustion apparatus may be returned to a downstream side of the most upstream dispersion part arranged in the emulsion generation section.

Further, in the processed water generation step, it is preferred that Mg ions, Ca ions, and Fe ions contained in the raw water are removed from the raw water by ion exchange, and then the raw water is allowed to pass through at least one of the tourmaline container filled with tourmaline and the obsidian container filled with obsidian to produce the processed water.

Further, in the processed water generation step, it is preferred that Na ion concentration in the processed water is increased more than Na ion concentration in the raw water.

With such a configuration, it becomes possible to prepare the processed water having high surface tension and high surface activity as a raw material of an emulsion fuel of excellent combustion efficiency.

Further, since the processed water is removed of Mg ions, Ca ions, and Fe ions and contains Na ions, when the processed water is mixed and stirred with the fuel oil, a fatty acid liberated by hydrolysis of a triglyceride contained in the fuel oil reacts with Na ions, instead of reacting with Mg ions, Ca ions, and Fe ions, to produce a fatty acid sodium salt serving as a surfactant, thereby making emulsification possible.

Emulsion produced from the fuel oil and the processed water is derived from the processed water having higher surface tension than the raw water, thus the emulsion has high energy, generates a high heat quantity in combustion, and has excellent combustion efficiency. Specifically, a conventional emulsifier has a property of lowering surface tension of a liquid, which in turn reduces a heat generation quantity of the emulsion fuel in combustion. In contrast, the processed water of the present invention has enhanced surface tension while maintaining a capability of being emulsified with the fuel oil, thus a high heat generation quantity can be achieved.

In the processed water generation step, surface tension of the processed water measured at a water temperature of 26°C is preferably adjusted to 50mN/m or more.

With such a configuration, the emulsion fuel generating a high heat quantity in combustion can be achieved.

In the supply step, gas is supplied to the combustion apparatus in a supply quantity within a range of 0 to the misfiring air quantity as fuel oil being supplied, beyond which a misfire is caused when a water-free fuel oil is supplied.

In this manner, the gas supply quantity adjusting section is provided, thus the combustion apparatus can be efficiently operated. In the step of the processed water generation device of the present invention, atomic hydrogen as an energy source and also oxygen are produced, thus when the processed water supplied from the processed water generation device is used for the emulsion fuel, in principle, a supply of oxygen and the air in the combustion apparatus becomes unnecessary.

EFFECTS OF INVENTION

According to the present invention, the processed water, produced by removing, from raw water, Ca ions and Mg ions contained in the raw water and allowing to remain or adding Na ions in the raw water, is used as a raw material of the emulsion fuel, thus it becomes possible to produce the emulsion fuel by using the processed water having highly active atomic hydrogen, and supply the emulsion fuel of high energy efficiency.

Further, using the processed water makes it possible to perform emulsification with the fuel oil without using an emulsifier, thus an emulsifier-free emulsion fuel can be achieved.

Moreover, the emulsion fuel of the present invention uses the processed water made of soft water from which Ca ions and Mg ions are removed as a raw material, and also does not contain an emulsifier, thus oxidation, rust and corrosion in the combustion apparatus can be suppressed and deterioration of the combustion apparatus caused by the emulsion fuel can be suppressed.

In this configuration, the tank may be a single tank storing the processed water and the fuel oil, including a water supply pipe having a liquid suction port arranged near a bottom part of the tank and an oil supply pipe having a liquid suction port attached on a float floating on the surface of a liquid stored in the tank, and the merging section may alternately perform a supply of the processed water from the water supply pipe and a supply of the fuel oil from the oil supply pipe to merge the fuel oil and the processed water.

With such a configuration, it is not necessary to prepare a plurality of tanks for the processed water and the fuel oil, making a device configuration simple. As such, it is not necessary to add a new tank for the processed water to the existing fuel supply device, making it easy to introduce the emulsion fuel supply device of the present invention.

BRIEF DESCRIPTION OF DRAWINGS

FIG. 1 is a schematic block diagram of an emulsion fuel supply device according to one embodiment of the present invention.

FIG. 2 is a schematic block diagram of a processed water treatment device according to one embodiment of the present invention.

FIG. 3 is a schematic longitudinal cross-sectional block diagram of an emulsion generator according to one embodiment of the present invention.

FIG. 4 is a schematic block diagram of an example of having a separation tank for surplus emulsion in the emulsion fuel supply device according to one embodiment of the present invention.

FIG. 5 is a schematic block diagram of an emulsion fuel supply device according to a modified example of the present invention.

FIG. 6 is graphs showing average diameter and standard deviation of emulsion particles in samples, in which heavy oil A is added and stirred in processed water of Example 1, distilled water, and ultrapure water.

FIG. 7 is a measurement result of surface tension of processed water of Examples 2 to 9 and ultrapure water.

FIG. 8 is a measurement result of surface tension of processed water of Examples 10 and 11, ultrapure water, raw water, surfactant-added tap water in which a surfactant is added to the raw water.

FIG. 9 is a measurement result of an ion chromatograph method with the processed water of Example 1 and raw water of the processed water.

DESCRIPTION OF EMBODIMENTS

Hereinafter, an emulsion fuel supply device and a supply method thereof according to one embodiment of the present invention will be described with reference to the drawings.

In the present application, an emulsion fuel refers to a fuel in which an aqueous liquid and an oily liquid are dispersed to be converted to a state similar to emulsion, regardless of the presence/absence of an emulsifier. Further, the emulsion fuel includes both complete emulsion in which an aqueous liquid and an oily liquid are emulsified by dispersion and incomplete emulsion in which an aqueous liquid and an oily liquid are mixed to be partially dispersed and partially undispersed.

As an emulsion fuel of the present embodiment, incomplete emulsion composed of only an aqueous liquid and an oily liquid without using an emulsifier is preferably used.

<Emulsion fuel supply device>

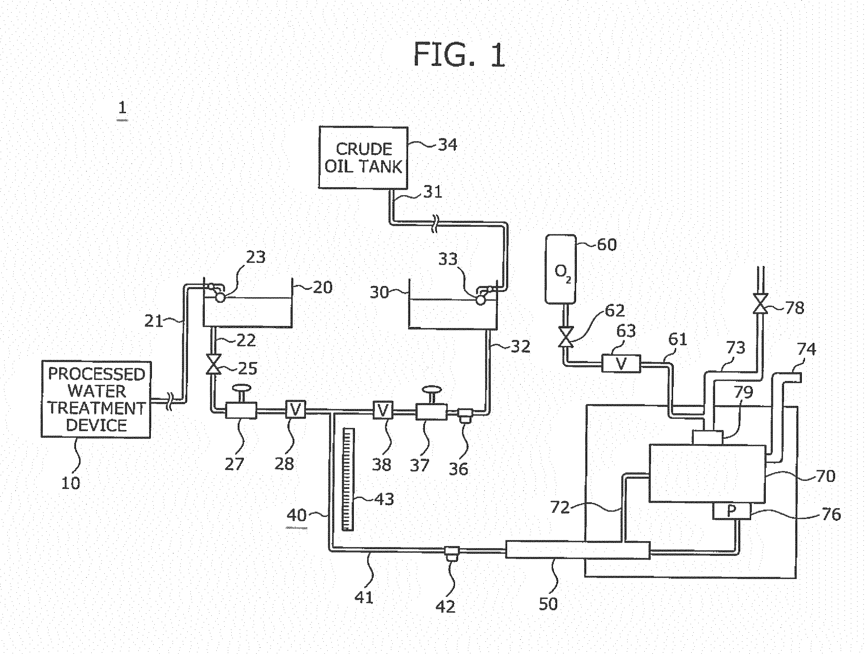

FIG. 1 is a schematic block diagram of an emulsion fuel supply device 1 according to the present embodiment.

The emulsion fuel supply device 1 is a device for producing an emulsion fuel from water and a fuel oil and supplying the emulsion fuel and oxygen to a diesel engine 70 as a combustion apparatus. The emulsion fuel supply device 1 includes, as main constitutional elements, a processed water treatment device 10 for producing processed water as a raw material of the emulsion fuel from tap water, a processed water tank 20 for storing the processed water, a fuel oil tank 30 for storing the fuel oil, a liquid feed part 40 for transporting a mixture liquid in which the processed water and the fuel oil are merged to an emulsion generator 50, an emulsion generator 50 for producing the emulsion fuel from the mixture liquid of the processed water and the fuel oil and also supplying the emulsion fuel to the diesel engine 70, and a oxygen gas cylinder 60 for mixing the air introduced into the diesel engine 70 with oxygen gas.

As a combustion apparatus to which the emulsion fuel supply device 1 of the present embodiment is applied, any kinds of internal combustion engines can be applied, so long as they work with heat energy generated by exploding and burning a fuel in a cylinder. For example, the emulsion fuel supply device I can be preferably applied to a diesel engine, in particular, a diesel engine for a ship. It can be also applied to a boiler.

As a fuel oil, a variety of fuel oils may be used. For example, well-known fuel oils used for an emulsion fuel, such as heavy oil A, heavy oil B, heavy oil C, light oil, kerosene, gasoline, and biofuel, can be used.

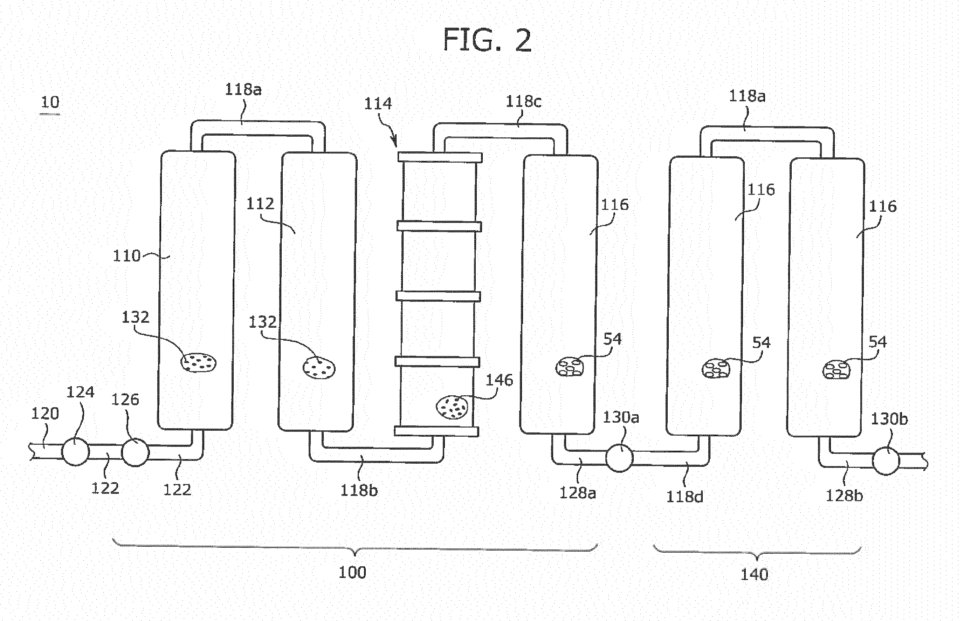

The processed water treatment device 10 includes, as shown in Fig. 2, a soft water generation device 100, in which a first soft water generator 110, a second soft water generator 112, an ion generator 114, and an obsidian container 116 are connected in series in this order via communication pipes 118a, 118b, and 118c, and a surface tension increasing device 140 connected at a downstream side of the soft water generation device 100.

The soft water generation device 100 is a device for producing soft water from raw water.

The soft water refers to water having a hardness of less than 100mg/l. The hardness is an index represented by Ca concentration and Mg concentration contained in water and calculated by: hardness = Ca concentration (mg/l) x 2.5 + Mg concentration (mg/l) x 4.1.

In the present embodiment, it is preferable to use water having the hardness of less than 100mg/l, from which Ca ions, Mg ions, and Fe ions are removed.

Raw water with high pressure such as tap water, for example, is introduced into the first soft water generator 110 from a water supply pipe 120 via a communication pipe 122.

Alternatively, as raw water, spring water, well water, rainwater, and water of a river, all subjected to a purification and a disinfection treatments by a known water purifying filter, sterilization apparatus, and the like, as well as clean spring water and well water, may be used and introduced into the first soft water generator 110 by a pump not illustrated via the water supply pipe 120 and the communication pipe 122.

An inlet open/close valve 124 functioning as a faucet is provided between the water supply pipe 120 and the communication pipe 122, and a check valve 126 is provided on the way of the communication pipe 122. A discharge pipe 128a is installed on an outlet side of the obsidian container 116 and an outlet open/close valve 130a is provided on the tip or the way of the discharge pipe 128a.

A granular ion exchange resin 132 is filled inside the first soft water generator 110 and the second soft water generator 112. It is noted that the two soft water generators 110 and 112 can be combined into a single soft water generator.

The ion exchange resin 132 is for removing metal ions contained in raw water, such as $Ca^{2+}$, $Mg^{2+}$, and $Fe^{2+}$, and converting the raw water into soft water, in particular, for lowering the hardness of the raw water to a level near to zero. As the ion exchange resin 132, for example, a strongly acidic cation exchange resin ($RzSO_3Na$), in which a styrene-divinyl benzene copolymer having a spherical shape is uniformly sulfonated, is used.

An ion exchange reaction by the ion exchange resin 132 using $RzSO_3Na$ is as follows.

$$2RzSO_3Na + Ca^{2+} \rightarrow (RzSO_3)_2Ca + 2Na^+$$

$$2RzSO_3Na + Mg^{2+} \rightarrow (RzSO_3)_2Mg + 2Na^+$$

$$2RzSO_3Na + Fe^{2+} \rightarrow (RzSO_3)_2Fe + 2Na^+$$

In essence, by passing raw water through the ion exchange resin 132, $Ca^{2+}$, $Mg^{2+}$, $Fe^{2+}$, etc., contained in the raw water are removed and $Na^+$ is generated.

On the other hand, by passing the raw water through the ion exchange resin 132, a hydroxide ion ($OH^-$) and a hydronium ion ($H_3O^+$) are generated as follows.

$$H_2O \rightarrow H^+ + OH^-$$

$$H_2O + H^+ \rightarrow H_3O^+$$

Thus, when raw water is hard water, the raw water is removed of metal ions such as $Ca^{2+}$, $Mg^{2+}$, and $Fe^{2+}$ by passing through the ion exchange resin 132, and becomes soft water. Further, Na+, OH-, and a hydronium ion ($H_3O^+$) are generated in the raw water. However, chlorine contained in the tap water passes through the resin as it is without being ionized.

An ion generator 114 has a plurality of cartridges not illustrated lined up vertically and continuously in the same layout in series, where the each cartridge is filled with a tourmaline powder having an average particle diameter of 5 to 15$\mu$m) or a tourmaline pellet having a pellet shape, obtained by mixing a tourmaline powder with other ceramic material and burning a mixture. Alternatively, the cartridge may be filled with a tourmaline powder or a granular tourmaline mixed with a metal plate.

Tourmaline has a plus electrode and a minus electrode, and because of this plus electrode and minus electrode, water is charged with an electromagnetic wave having a wave length of 4 to $14\mu m$ and a cluster of water is cleaved to produce a hydronium ion ($H_3O^+$). Energy of the electromagnetic wave having a wave length of 4 to $14\mu m$ is about 0.004 watt/cm$^2$.

Water is converted to soft water of a nearly zero hardness by passing through the ion exchange resin 132 and tourmaline is rubbed against each other in this soft water. In the soft water of a nearly zero hardness, adhesion of Mg ion and Ca ion to the minus electrode of tourmaline can be prevented, thus deterioration of a function of tourmaline as a plus electrode and a minus electrode can be prevented.

As the metal plate, at least one kind of metal selected from aluminum, stainless steel, and silver is used. It is preferred that metal used for this purpose does not become rusty in water or dissolve in water. Aluminum has a bleaching effect as well as a bactericidal effect and an antimicrobial effect, stainless steel has a cleaning-improving effect as well as a bactericidal effect and an antimicrobial effect, and silver has a bactericidal effect and an antimicrobial effect.

A weight ratio of tourmaline to the metal plate is preferably from 10:1 to 1:10. When the weight ratio exceeds this range, one material occupies too much ratio and effects of the both materials cannot be exerted simultaneously.

Each of the cartridges of the ion generator 114 is configured such that water passing through a number of holes formed on a bottom surface of the cartridge is jetted upward from below into a tourmaline powder or a tourmaline pellet. In this process, since tap water has high water pressure, the size and the number of the holes are set in such a way that the water having high water pressure vigorously collides with a tourmaline powder or a tourmaline pellet inside the cartridge and the tourmaline powder or the tourmaline pellet is stirred in the cartridge by force of the water. A purpose for jetting water to tourmaline for stirring tourmaline is that, by generating friction between tourmaline and water by the stirring, the plus and minus electrodes are dissolved from tourmaline into the water and cleave clusters of water, so that a large quantity of hydronium ions ($H_3O^+$) are produced.

The plus and minus electrodes are generated when tourmaline is rubbed against each other and, by the contact of the electrodes with water, minus ions are increased in the water. It is noted that when a large quantity of hydronium ions ($H_3O^+$) are desired to be produced by cleaving clusters of water, the cartridge may be filled with only tourmaline.

Since tourmaline contains the plus and minus electrodes, when tourmaline is stirred in water, water is dissociated into a hydrogen ion and a hydroxide ion.

$$H_2O \rightarrow H^+ + OH^-$$

Further, a hydronium ion ($H_3O^+$) having a surfactant effect is produced by a hydrogen ion and water. An amount of the hydronium ion produced in the ion generator 114 is much higher than that generated in the ion exchange resin 132.

$$H_2O + H^+ \rightarrow H_3O^+$$

A part of the produced hydronium ions are combined with water to produce hydroxyl ions ($H_3O_2^-$) and hydrogen ions.

$$H_3O^+ + H_2O \rightarrow H_3O_2^- + 2H^+$$

The water passing through the ion exchange resin 132 is allowed to pass through the ion generator 114 to generate a hydronium ion ($H_3O^+$), a hydroxyl ion ($H_3O_2^-$), $H^+$, and $OH^-$. It is noted that chlorine passing through the ion exchange resin 132 and $Na^+$ produced in the ion exchange resin 132 pass through the ion generator 114 as they are.

Next, the water passing through the ion generator 114 is allowed to pass through the inside of the obsidian container 116 storing obsidian having a particle diameter of about 5mm to 50mm. There is no limitation on a production area of obsidian.

When the water passing through the ion generator 114 is allowed to pass through the obsidian container 116, the water is added with $e^-$ (negative electron). As a result, chlorine contained in the tap water becomes chloride ions by the negative electrons.

$$Cl_2 + 2e^- \rightarrow 2Cl^-$$

This $Cl^-$ and the above $Na^*$ are brought into a stable state as an ion. A stable state refers to a state where an ion condition is maintained over a long period of time. Further, the hydroxyl ion is also brought into a stable state as an ion. By allowing water to pass through obsidian, hydronium ions are further produced, and hydroxyl ions and hydrogen ions are also further produced as compared with water passing through the ion generator 114.

$$H_2O + H^+ \rightarrow H_3O^+$$

$$H_3O^+ + H_2O \rightarrow H_3O_2^- + 2H^+$$

Besides those, the following reactions also occur when water is passing through obsidian.

$$OH^- + H^+ \rightarrow H_2O$$

$$2H^+ + 2e^- \rightarrow 2H_2$$

Further, when water is passing through the obsidian container 116, an oxidation-reduction potential of the water is shifted from +340mV to -20 to -240mV due to minus electrons of obsidian. Further the water passing through obsidian contains a large quantity of dissolved oxygen and active hydrogen.

The soft water generation device 100 of the present embodiment includes the first soft water generator 110, the second soft water generator 112, the ion generator 114, and the obsidian container 116, however the present invention is not limited thereto and the device may be any of devices capable of removing Ca ions, Mg ions, and Fe ions from raw water.

Further, the order of passing water through the ion generator 114 and the obsidian container 116 may be reversed, and the water may be allowed to pass through the obsidian container 116 first, and then pass through the ion generator 114.

A downstream side of the soft water generation device 100 is connected to the surface tension increasing device 140 by connecting the a communication pipe 118d to an outlet open/close valve 130a on the discharge pipe 128a of the soft water generation device 100.

The surface tension increasing device 140 is a device for increasing surface tension of the soft water and also increasing a quantity of atomic hydrogen in the soft water by passing the soft water produced from the raw water in the soft water generation device 100 through a tourmaline powder or a tourmaline pellet, and/or the obsidian container 116.

The surface tension increasing device 140 of the present embodiment is, as shown in Fig. 2, formed by connecting the obsidian containers 116 in series, however, the device is not limited thereto, and it may be formed by connecting a plurality of the ion generators 114 in series or by connecting the ion generators 114 and the obsidian containers 116 in series.

Configurations of the ion generator 114 and/or the obsidian container 116, constituting the surface tension increasing device 140, are the same as those included in the soft water generation device 100.

A discharge pipe 128b is installed on an outlet side of the most downstream obsidian container 116 and an outlet open/close valve 130b is provided on the tip or the way of the discharge pipe 128b. The open/close valve 130b is connected to an introduction pipe 21 for supplying the processed water produced in the surface tension increasing device 140 to the processed water tank 20 shown in Fig. 1.

Processed water is produced from raw water by passing the raw water through the soft water generation device 100 and then the surface tension increasing device 140.

The processed water contains large quantities of $Na^+$, $Cl^-$, $H^+$, $OH^-$, $H_2$, hydronium ions ($H_3O^+$), hydroxyl ions ($H_3O_2^-$), active hydrogen (atomic hydrogen), and dissolved oxygen.

However, soft water produced by passing the raw water through the soft water generation device 100, but not the surface tension increasing device 140, may be also used as processed water.

The process water passing through the soft water generation device 100 and then the surface tension increasing device 140 contains a more quantity of active atomic hydrogen having high energy, and has higher energy, as compared to the one passing through the soft water generation device 100, but not the surface tension increasing device 140. That is, the former produces more energy during combustion.

A hydroxyl ion ($H_3O_2^-$), which is found in large quantities in the processed water passing through the soft water generation device 100 and then the surface tension increasing device 140, undergoes, during combustion, a chemical change in which two O contained in the ion are converted to $O_2$, while three H are converted to active atomic hydrogen that is burnt after becoming H gas.

After raw water (tap water) is softened by the soft water generation device 100, the raw water is subjected to repeating a treatment of passing through at least one of tourmaline and obsidian for 30 minutes or more up to several hours using the surface tension increasing device 140 to obtain the processed water of the present embodiment. The processed water thus obtained contains Mg ions, Ca ions, and Fe ions in an amount equal to or less than the detection lower limit of an ion chromatograph method, while concentration of Na ions is increased 3 times or more, preferably 3.5 times or more, than the raw water.

Further, surface tension of the processed water is higher than that of the raw water (tap water) and increased to the same level as that of ultrapure water.

In this manner, the processed water treated with the processed water treatment device 10 of the present embodiment does not contain Mg ions, Ca ions, or Fe ions, and has high concentration of Na ions, thus when the processed water is mixed and stirred with an oil, a fatty acid is liberated by hydrolysis of a triglyceride contained in the oil, and reacts with Na ions to produce a fatty acid sodium salt as a surfactant. Therefore, the processed water of the present embodiment can be emulsified by being mixed and stirred with a fuel oil without using an emulsifier.

Thus, incomplete emulsion obtained by emulsifying the processed water of the present embodiment and the fuel oil can be used as an emulsion fuel.

The emulsion fuel of the present embodiment is an emulsifier-free emulsion fuel, which is produced by emulsifying the processed water of the present embodiment and the fuel oil. Since surface tension of the emulsion fuel increases through the surface tension increasing device 140 and the processed water used for producing the emulsion fuel contains atomic hydrogen, the emulsion fuel generates a higher heat quantity in combustion and exhibits better combustion efficiency than the fuel oil used as a raw material.

The processed water tank 20 is a tank for storing the processed water produced by the processed water treatment device 10 and includes an introduction pipe 21 for introducing the processed water from the processed water treatment device 10 to the processed water tank 20, a water supply pipe 22 for supplying the processed water in the processed water tank 20 to a liquid feed part 40, and a ball tap 23 for keeping a height of the processed water in the processed water tank 20 at a predetermined water level.

The ball tap 23 is a known ball tap, having a floating ball fixed to a tip of a support shaft that is attached to a valve on the introduction pipe 21. The ball tap 23 is configured that the floating ball floating on a liquid surface moves up and down in accompany with an up-and-down movement of the liquid surface, and when a location of the floating ball becomes lower than a predetermined position, the valve on the introduction pipe 21 is opened to supply water into the processed water tank 20 from the introduction pipe 21.

The water supply pipe 22 is provided with an electromagnetic valve 25 operable from an operation panel not illustrated, a flow rate control valve 27 for controlling a flow rate of the processed water from the water supply pipe 22, and a flow rate sensor 28.

The fuel oil tank 30 is a tank for storing a fuel oil supplied from a crude oil tank 34 and includes an introduction pipe 31 for introducing a fuel oil from the crude oil tank 34 to the fuel oil tank 30, an oil supply pipe 32 for supplying the fuel oil in the fuel oil tank 30 to the liquid feed part 40, and a ball tap 33 for keeping a height of the fuel oil in the fuel oil tank 30 at a predetermined liquid level.

The configuration of the ball tap 33 is the same as the ball tap 23, and with the ball taps 23 and 33, liquid heights of the processed water tank 20 and the fuel oil tank 30 are kept at the same height with each other.

The oil supply pipe 32 is provided with a filer 36 for removing dirt and the like in the fuel oil, a flow rate control valve 37 for controlling a flow rate of the fuel oil from the oil supply pipe 32, and a flow rate sensor 38.

The processed water tank 20 and the fuel oil tank 30 are arranged at a position higher than the diesel engine 70. With such a configuration, the processed water and the fuel oil can be supplied to the diesel engine 70 via the liquid feed part 40 and the emulsion generator 50 only by gravity of the processed water tank 20 and the fuel oil tank 30, and pressure of a pump 76 originally installed in the diesel engine 70, thus there is no need of providing a separate pump with the liquid feed part 40.

The liquid feed part 40 is a part for merging the processed water from the water supply pipe 22 and the fuel oil from the oil supply pipe 32 into a single liquid feed pipe 41 and feeding a merged liquid to the emulsion generator 50. An upstream side of the liquid feed part 40 is connected to the water supply pipe 22 and the oil supply pipe 32, while a downstream side of the liquid feed part 40 is provided with the liquid feed pipe 41 connected to the emulsion generator 50, a filter 42 for removing a dirt and the like of a liquid passing through the liquid feed pipe 41, and a scale 43 displaying scales in units of 1cm and 1mm, arranged along the liquid feed pipe 41.

The liquid feed pipe 41 is made of a transparent tube, so that a liquid flowing inside of the pipe can be visually inspected from the outside. In the liquid feed pipe 41, the processed water and the fuel oil are separated and flow in a strip pattern where the processed water and the fuel oil are alternately arranged. Thus, a mixing ratio of the processed water and the fuel oil can be known by reading lengths of a processed water part and a fuel oil part from the scales displayed on the scale 43. The mixing ratio may be read by visual inspection for calculation or taken as an image by a digital camera and analyzed by a computer for calculation.

The liquid feed pipe 41 is arranged in such a manner that its axial direction becomes horizontal over the whole length.

Having such a configuration can prevent a misfire from easily occurring in the diesel engine 70 when supplies of the processed water and the fuel oil to the diesel engine 70 are stopped and then restarted.

Specifically, the processed water is heavier in specific gravity than the fuel oil, thus, if the liquid feed pipe 41 has a portion where the axial direction of the liquid feed pipe 41 is tilted with respect to the horizontal direction, the processed water ends up being shifted to a lower side and the fuel oil ends up being shifted to a higher side when supplies of the processed water and the fuel oil to the diesel engine 70 are stopped. When the supplies to the diesel engine 70 are restarted, the processed water part accumulated in the lower side reaches the diesel engine 70 via the emulsion generator 50 and causes temporal reduction in a ratio of the fuel oil in the emulsion fuel, thus there is a danger of a misfire in the diesel engine 70.

Further, when the liquid feed pipe 41 is arranged with its axial direction set horizontal over the whole length, a ratio of the processed water to the fuel oil hardly changes in various parts inside the liquid feed pipe 41 during stopping of the supplies of the processed water and the fuel oil, thus there is no need to do a work such as removing the processed water from the liquid feed pipe 41 before restarting the supplies in order to prevent a misfire in the diesel engine 70, and workability is improved.

The total length of the liquid feed pipe 41 is 50cm or less, preferably 30cm or less, and further preferably 20cm or less. By keeping the total length of the liquid feed pipe 41 in such a short range as this, the ratio of the processed water to the fuel oil can be prevented from changing while the processed water and the fuel oil flow in the liquid feed pipe 41 or during an interval between the stop and the restart of the supplies to the diesel engine 70.

The emulsion generator 50 is a device for jetting a mixture of the processed water and the fuel oil, fed from the liquid feed part 40, from fine holes to a larger diameter space for emulsification.

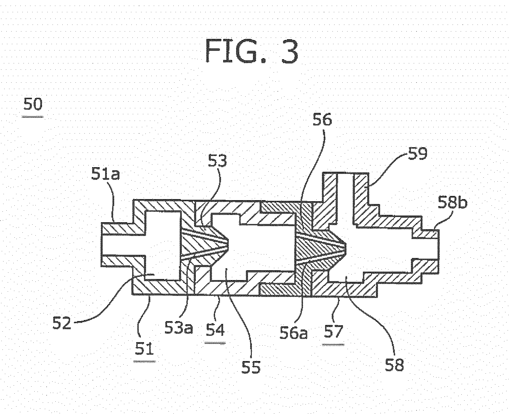

The emulsion generator 50 is, as shown in Fig. 3, shaped in an approximately cylindrical lengthy body in which housings 51, 54, and 57 are connected in series.

The housing 51 is formed in approximately cylinder shape. A cylindrical connection part 51a for connecting to the liquid feed pipe 41 is formed at an axial end of the housing 51 on an upstream side. A closing part 53 for closing an end part and a pair of fine holes 53a including through holes obliquely penetrating the closing part 53 with respect to an axial direction are formed at an axial end of the housing 51 on a downstream side.

The pair of the fine holes 53a are adjacently formed in a width direction perpendicular to the axial direction of the housing 51 and also obliquely formed so as to mutually approach to each other toward a downstream side. In this manner, since the pair of the fine holes 53a are obliquely formed so as to mutually approach to each other toward the downstream side, two flows of liquid proceeding the fine holes 53a are jetted into a large-diameter space 55 and collide with each other, thus diffusion of the liquid is further promoted.

The pair of the fine holes 53a are formed to be symmetrical to each other with a plane passing through a central axis of the housing 51 as a center.

It is noted that the number of the fine holes 53a is not limited to a pair and a plurality of three or more, for example four, fine holes may be installed.

A large-diameter space 52 in a large diametric cylindrical shape, having a larger diameter than the fine holes 53a, is formed between the connection part 51a and the closing part 53.

The housing 54 has the same shape as the housing 51, except that a connection part 54a is formed connectably with an outer periphery of the closing part 53.

The housing 57 has the same shape as the housing 54, except that a return emulsion introduction port 59 as an introduction port for introducing surplus emulsion fuel that is surplus fuel returning from the diesel engine 70 is provided on a side surface of a large-diameter space 58 on a downstream side of the fine holes 53a and 56a, and a connection part 58b connected to a supply pipe 71 for supplying the emulsion fuel to the diesel engine 70 is provided at an axial end part of the housing 57 on a downstream side.

In the emulsion generator 50, a mixture of the processed water and the fuel oil is supplied to the large-diameter space 52 from the connection part 51a by the pump 76 equipped in the diesel engine 70 and connected to the supply pipe 71, and jetted into the large-diameter space 55 through the fine holes 53a. Emulsification is performed by jetting the mixture into the large-diameter space 55 from the fine holes 53a and diffusing the mixture. Further, when the mixture is jetted into the large-diameter space 58 from the fine holes 56a, the similar diffusion occurs and emulsification is promoted again. Then, the mixture is merged with surplus emulsion fuel that is returned from a surplus emulsion discharge pipe 72 of the diesel engine 70 through the return emulsion introduction port 59, and supplied to the diesel engine 70 through the connection part 58b and the supply pipe 71.

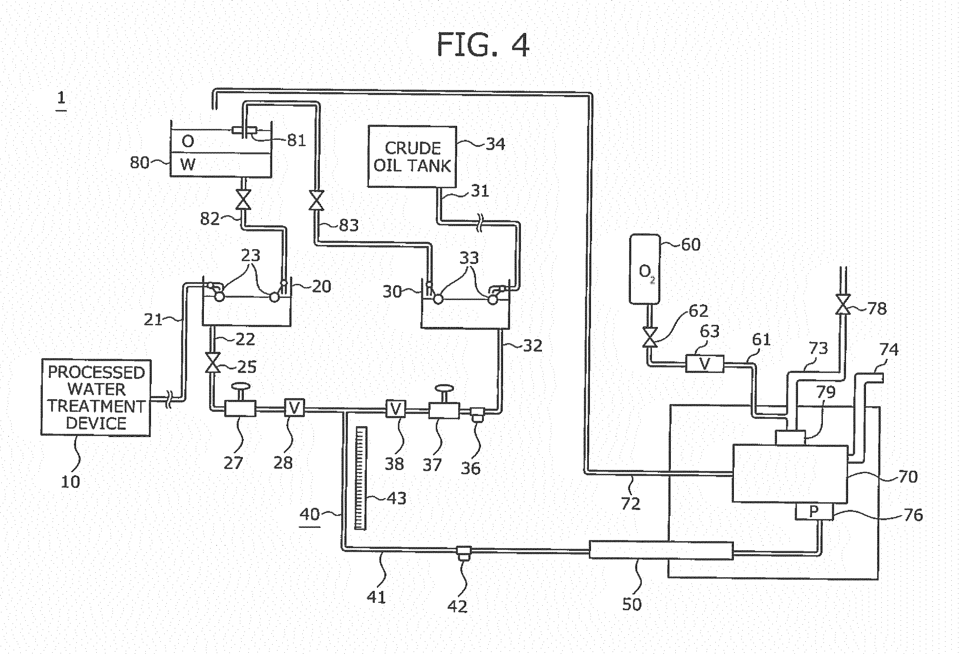

It is noted that, in the present embodiment, it is configured that the surplus emulsion fuel returning from the diesel engine 70 is returned to the emulsion generator 50 through the surplus emulsion discharge pipe 72, however, as shown in Fig. 4, the surplus emulsion discharge pipe 72 may be connected to a separation tank 80 for separating the surplus emulsion into the processed water and the fuel oil.

The separation tank 80 is a tank for storing the surplus emulsion fuel supplied from the surplus emulsion discharge pipe 72 and separating the surplus emulsion into the processed water and the fuel oil by a still-standing treatment. A downstream end part of the surplus emulsion discharge pipe 72 is arranged to be positioned on a liquid surface of the separation tank 80.

An upstream end part of the water supply pipe 82 is connected to a bottom surface of the separation tank 80 in a manner that an opening of the water supply pipe 82 serving as a suction port is positioned near the bottom part of the separation tank 80.

When the processed water and the fuel oil are stored in the separation tank 80, the processed water having greater specific gravity is stored near the bottom surface of the tank to form a water phase W, and the fuel oil having smaller specific gravity is stored near the liquid surface of the tank to form an oil phase O, thus creating a two-phase state where the water phase W and the oil phase O are separated. Consequently, it becomes possible to discharge the processed water stored near the bottom surface of the separation tank 80 from the opening at the upstream end part of the water supply pipe 82.

An upstream part of an oil supply pipe 83 is arranged on an upper part of the separation tank 80, and a suction port at an upstream end part of the oil supply pipe 83 is, as shown in Fig. 4, fixed to a float 81 that is made of a known material. An opening serving as the upstream suction port of the oil supply pipe 83, fixed to the float 81, is positioned inside the oil phase O and makes it possible to discharge the fuel oil stored near the liquid surface of the separation tank 80.

The water supply pipe 82 and the oil supply pipe 83 are each provided with an electromagnetic valve.

When the surplus emulsion fuel is returned to the large-diameter space 58 via the surplus emulsion discharge pipe 72 and the return emulsion introduction port 59, the viscosity of the emulsion fuel introduced into the diesel engine 70 from the large-diameter space 58 is increased, which in turn increases the load to the diesel engine 70, thus the temperature of the diesel engine 70 may be increased. However, as shown in Fig. 4, when a configuration is made such that the surplus emulsion fuel is separated in the separation tank 80 and the separated processed water and fuel oil are returned to the processed water tank 20 and the fuel oil tank 30, respectively, the surplus emulsion fuel is mixed with the processed water and the fuel oil after separation, thus the temperature rise of the diesel engine 70 due to the load increase can be suppressed.

It is noted that, in the example shown in Fig. 4, the processed water and the fuel oil separated in the separation tank 80 are returned to the processed water tank 20 and the fuel oil tank 30, respectively, however, the separated processed water may be discarded instead of returning to the processed water tank 20.

The emulsion fuel produced in the emulsion generator 50 is made of incomplete emulsion, which is not in a completely emulsified state.

The diesel engine 70 is a known diesel engine for a ship and includes a pump 76 for feeding the emulsion fuel supplied from a supply pipe 71 to the diesel engine 70, a surplus emulsion discharge pipe 72 for discharging surplus emulsion fuel in the diesel engine 70, an air suction port 73 for introducing the air via a filter 79 from the open air outside an engine compartment not illustrated, where the diesel engine 70 is installed, and an exhaust port 74 for exhausting an exhaust gas.

The air suction port 73 is provided with a valve 78 for adjusting an introduction quantity of the air from zero to a desired quantity. Further, an oxygen gas cylinder 60 is connected to the air suction port 73 via an oxygen introduction pipe 61. Thus, the air suction port 73 is configured such that the air introduced into the diesel engine 70 can be mixed with oxygen gas by controlling an electromagnetic valve 62 installed on the oxygen introduction pipe 61 from an operation panel not illustrated on the basis of a measured value of a flow rate measuring instrument 63 installed on the oxygen introduction pipe 61.

< Emulsion fuel supply method>

The emulsion fuel of the present embodiment is produced by the following emulsion fuel supply method and supplied to the diesel engine 70.

First, a raw water processing step is performed to prepare processed water from raw water. However, the emulsion fuel supply method does not need to include the raw water processing step and processed water prepared in advance may be used.

In the raw water processing step, pressurized raw water such as tap water is supplied to the processed water treatment device 10 shown in Fig. 2.

By passing the raw water through the ion exchange resin 132 made of a strongly acidic cation exchange resin and the like in the first soft water generator 110 and the second soft water generator 112, the raw water is removed of metal ions contained in the raw water, such as $Ca^{2+}$, $Mg^{2+}$, and $Fe^{2+}$, and converted into soft water, and, in the same time, $Na^+$, $OH^-$, and a hydronium ion ($H_3O^+$) are produced in the raw water.

Next, the water passing through the first soft water generator 110 and the second soft water generator 112 is supplied to the ion generator 114 and allowed to pass through a tourmaline powder having an average particle diameter of 5 to 15$\mu$m or a tourmaline pellet obtained by mixing a tourmaline powder with other ceramic material and then burning a mixture. By this treatment, water is charged with an electromagnetic wave having a wave length of 4 to 14$\mu$m and a cluster of water is cleaved to generate a hydronium ion ($H_3O^+$), a hydroxyl ions ($H_3O_2^-$), $H^+$, and $OH^-$.

The water is allowed to pass through the inside of the obsidian container 116 storing obsidian having a particle diameter of about 5mm to 50mm. Hydronium ions are further generated, and also hydroxyl ions and hydrogen ions are further generated in the water passing through obsidian as compared with the water passing through the ion generator 114. Soft water is produced by the above treatment.

Subsequently, the soft water is allowed to pass through at least one of the ion generator 114 and the obsidian container 116 to produce processed water. Specifically, a circulation time in the ion generator 114 only, in the obsidian container 116 only, or in both the ion generator 114 and the obsidian container 116 is set to be 30 minutes or more.

Subsequently, the processed water is supplied to the processed water tank 20 from the introduction pipe 21. Further, a fuel oil is supplied to the fuel oil tank 30 from the crude oil tank 34 through the introduction pipe 31. During this process, liquid heights of the processed water tank 20 and the fuel oil tank 30, i.e., quantities of the water and the oil, are kept at a predetermined height by the ball taps 23 and 33, respectively.

The liquid heights of the processed water tank 20 and the fuel oil tank 30 are adjusted to have substantially the same heights, specifically the liquid height difference between them is 3cm or less and preferably 1cm or less. Having such a configuration makes it possible to feed the processed water and the fuel oil to the liquid feed part 40 at a proper ratio.

When the liquid heights of the processed water tank 20 and the fuel oil tank 30 are not controlled, a ratio of the processed water to the fuel oil fed to the liquid feed pipe 41 varies depending on which is higher between the liquid height of the processed water tank 20 and the liquid height of the fuel oil tank 30, thus this configuration is not desirable. For example, at a timing at which the liquid height of the processed water tank 20 is higher than that of the fuel oil tank 30, only the processed water is fed to the liquid feed pipe 41, and interfacial tension between the processed water and the fuel oil prevents the fuel oil from entering the liquid feed pipe 41. Conversely, at a timing at which the liquid height of the fuel oil tank 30 is higher than that of the processed water tank 20, only the fuel oil is fed to the liquid feed pipe 41, and interfacial tension between the processed water and the fuel oil prevents the processed water from entering the liquid feed pipe 41.

Next, the pump 76 of the diesel engine 70 is driven while the electromagnetic valve 25 is closed, so that only the fuel oil is fed to the liquid feed pipe 41 from the fuel oil tank 30 by pressure of the pump 76.

When the fuel oil reaches the diesel engine 70, the diesel engine 70 is ignited to perform combustion of the fuel oil.

Then, the electromagnetic valve 25 is opened to mix the processed water with the fuel oil passing through the liquid feed pipe 41, thereby supplying the fuel oil and the processed water. In the liquid feed pipe 41, a phase of the processed water and a phase of the fuel oil are alternately proceeding.

A ratio between the processed water and the fuel oil circulating the liquid feed pipe 41 can be calculated by measuring the length of the phase of the processed water and the length of the phase of the fuel oil with the scale 43. The ratio between the processed water and the fuel oil is adjusted by the flow rate control valves 27 and 37.

The ratio between the processed water and the fuel oil is from 2:8 to 5:5, preferably from 2.5:7.5 to 5:5. When the ratio of the processed water exceeds 40%, a misfire easily occurs in the diesel engine 70, however a misfire rarely occurs even when the ratio of the processed water becomes 35 to 50% if oxygen gas is mixed into the air suction port 73 from an oxygen introduction pipe by opening an electromagnetic valve 62 of the oxygen gas cylinder 60.

A mixture of the processed water and the fuel oil passing through the liquid feed pipe 41 is fed to the emulsion generator 50 by gravity of the processed water tank 20 and the fuel oil tank 30 and pressure of the pump 76, and jetted into the large-diameter spaces 55 and 58 from the fine holes 53a and 56a, whereby the emulsion fuel in which the processed water and the fuel oil are incompletely emulsified is produced.

When the emulsion fuel reaches the diesel engine 70, to which only the fuel oil has been supplied, the emulsion fuel replaces the fuel oil and is used for combustion in the diesel engine 70.

A frequency of the diesel engine 70 supplied with the emulsion fuel having a ratio of 3:7 between the processed water and the fuel oil is comparable or superior to that of the diesel engine 70 supplied with the 100% fuel oil without being mixed with the processed water. A comparable or more amount of energy can be obtained even when the processed water is dispersed.

It is noted that, in the present embodiment, the ratio between the processed water and the fuel oil fed to the liquid feed pipe 41 is adjusted by controlling the flow rate control valves 27 and 37, however the present invention is not limited thereto, and the processed water and the fuel oil may be alternately supplied to the liquid feed pipe 41 by controlling the electromagnetic valve 25 installed on the water supply pipe 22 and an electromagnetic valve not illustrated, installed on the oil supply pipe 32, from an operation panel not illustrated.

Specifically, the electromagnetic valve of the fuel oil, not illustrated, is set to open when the electromagnetic valve 25 of the processed water is closed, and conversely, the electromagnetic valve 25 of the processed water is set to open when the electromagnetic valve of the fuel oil, not illustrated, is closed. With such a configuration, the ratio of the processed water and the fuel oil fed to the liquid feed pipe 41 is adjusted by controlling a ratio of the number of seconds specified as an opening time of the electromagnetic valve 25 of the processed water and the electromagnetic valve of the fuel oil, not illustrated.

Practically, in addition to the configuration of the emulsion fuel supply device 1 shown in Fig. 1, the electromagnetic valve not illustrated is installed on the oil supply pipe 32, and also the operation panel not illustrated for controlling the above electromagnetic valve not illustrated and the electromagnetic valve 25 is installed.

The operation panel is provided with a setting screen for setting a supply timing of the electromagnetic valve not illustrated and the electromagnetic valve 25. Further, the operation panel including a CPU, a storage section, and a timer, is connected to a control device, not illustrated, that is in turn connected to the electromagnetic valve not illustrated and the electromagnetic valve 25. This configuration makes it possible to control the electromagnetic valve not illustrated and the electromagnetic valve 25 by the CPU based on a control program stored in the storage section.

Further, when the emulsion fuel is supplied to the diesel engine 70, the air is supplied from the air suction port 73. An air quantity in this operation is set within a range of zero in the air quantity, i.e., no air is supplied, to the air quantity, beyond which a misfire is caused to the diesel engine 70 due to incomplete combustion when supplied with a water-free fuel oil (hereinafter, referred to as a "misfiring air quantity as fuel oil being supplied").

The supply quantity of the air is adjusted by controlling a valve not illustrated while viewing an air quantity display, not illustrated, installed on the air suction port 73.

When a water-free fuel oil is supplied to the diesel engine 70, a misfire occurs in the diesel engine 70 if the supply air quantity from the air suction port 73 becomes less than the misfiring air quantity as fuel oil being supplied. However, when the emulsion fuel of the present embodiment is supplied, a misfire does not occur in the diesel engine 70 even if the supply air quantity from the air suction port 73 is less than the misfiring air quantity as fuel oil being supplied. This is because the emulsion fuel of the present embodiment has higher energy than the fuel oil. Furthermore, a misfire does not occur in the diesel engine 70 with the supply air quantity in which no air is supplied from the air suction port 73, thus, the emulsion fuel of the present embodiment does not require a supply of the air, oxygen, or the like for operating the diesel engine 70.

Further, when the emulsion fuel of the present embodiment is supplied, a gas supplied from the air suction port 73 may be any of the air, the air mixed with oxygen, and oxygen.

Further, in the present embodiment, the diesel engine 70 is efficiently operated when the supply quantity of the air from the air suction port 73 is set to zero and the supply of the air is cut off. Since the processed water of the present embodiment contains oxygen as well as atomic hydrogen as energy source, supplies of oxygen and the air to the diesel engine 70 become, in principle, unnecessary.

When the valve-opening time of the electromagnetic valve of the fuel oil, which is not illustrated, is set to "n1 sec." and the valve-opening time of the electromagnetic valve 25 of the processed water is set to "n2 sec." on a setting screen of the operation panel, a control process by the control device is performed as follows. For example, n1 sec. and n2 sec. are set to 3 to 4 seconds and 1 to 2 seconds, respectively. When a start button is pressed on the setting screen of the operation panel under a state that the pump 76 of the diesel engine 70 is driven, the control process is started. The control process is executed by the CPU of the control device.

First, it is determined whether the timer reaches n1 seconds after being reset to zero. If the timer does not reach n1 seconds, it is determined again whether the timer reaches n1 seconds.

If the timer reaches n1 seconds, the electromagnetic valve on the oil supply pipe 32 is closed, the electromagnetic valve 25 is opened, and then the timer is reset to zero.

Next, it is determined whether the timer reaches n2 seconds. If the timer does not reach n2 seconds, it is determined again whether the timer reaches n2 seconds.

If the timer reaches n2 seconds, the electromagnetic valve 25 on the water supply pipe 22 is closed and the electromagnetic valve on the oil supply pipe 32 is opened.

Then, it is determined whether a stop button is pressed on the setting screen of the operation panel. If the stop button is not pressed, the first step is repeated.

If the stop button is pressed, the electromagnetic valve on the water supply pipe 22 is closed, thereby completing the process.

By the above process, the processed water and the fuel oil are alternately fed to the liquid feed pipe 41 from the water supply pipe 22 and the oil supply pipe 32 for the seconds set on the setting screen, and then the emulsion fuel in which the processed water and the fuel oil are dispersed at a desired ratio is passed through the emulsion generator 50 and lightly emulsified by stirring. Thereby the emulsion fuel can be ready to be supplied to the diesel engine 70.

<Modified Examples>

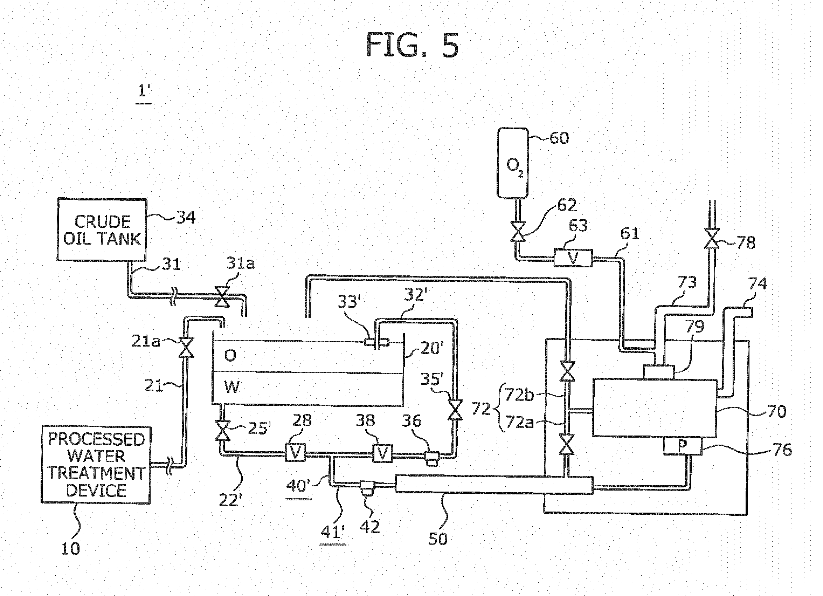

In the present embodiment, the processed water tank 20 for storing the processed water and the fuel oil tank 30 for storing the fuel oil are provided separately and independently. However, as shown in Fig. 5, the processed water and the fuel oil may be stored in a single water/oil tank 20'.

Fig. 5 shows an emulsion fuel supply device 1' according to a modified example, including the single water/oil tank 20' for storing the processed water and the fuel oil.

The emulsion fuel supply device 1' of the present example has the same configuration with the emulsion fuel supply device 1 shown in Fig. 1, except that: the water/oil tank 20' is provided in place of the processed water tank 20 and the fuel oil tank 30 shown in Fig. 1; the ball taps 23 and 33 for adjusting liquid quantities are not provided at the tips of the introduction pipes 21 and 31 from the processed water treatment device 10 and the crude oil tank 34 shown in Fig. 1; an upstream tip of an oil supply pipe 32' for supplying the fuel oil to an liquid feed pipe 41' is attached to a float 33'; and the surplus emulsion discharge pipe 72 is branched into a discharge pipe 72a connected to the return emulsion introduction port 59 and a discharge pipe 72b connected the water/oil tank 20'.

The water/oil tank 20' is a tank for storing the processed water supplied from the processed water treatment device 10 via the introduction pipe 21 and the fuel oil supplied from the crude oil tank 34 via the introduction pipe 31. The tank has a mixer-less structure having no stirring device for stirring a mixture of the processed water and the fuel oil. The emulsion generator 50 located downstream of the tank is equipped with capability to emulsify the processed water and the fuel oil that are completely separated from each other, thus it is not necessary to install a stirring device in the water/oil tank 20'. The water/oil tank 20' being a mixer-less tank can simplify a configuration of the device.

In the case such that quantities of the processed water and the fuel oil are reduced in the water/oil tank 20', the processed water and the fuel oil are supplied by opening valves 21a and 31a by an operator.

An upstream end part of a water supply pipe 22' is connected on a bottom surface of the water/oil tank 20' in such a way that an opening of the pipe as a suction port is positioned near the bottom part of the water/oil tank 20'.

When the processed water and the fuel oil are stored in the water/oil tank 20', the processed water having greater specific gravity is stored near the bottom surface of the tank to form a water phase W, and the fuel oil having smaller specific gravity is stored near the liquid surface of the tank to form an oil phase O, thus creating a two-phase state where the water phase W and the oil phase O are separated. Consequently, it becomes possible to discharge the processed water stored near the bottom surface of the water/oil tank 20' from the opening of the upstream end part of the water supply pipe 22'.

An upstream part of an oil supply pipe 32' is arranged on an upper part of the water/oil tank 20', and a suction port at the upstream end part of the oil supply pipe 32' is, as shown in Fig. 5, fixed to a float 33' that is made of a known material. An opening serving as the upstream suction port of the oil supply pipe 32', fixed to the float 33', is positioned inside the oil phase O, and makes it possible to discharge the fuel oil stored near the liquid surface of the water/oil tank 20'.

The water supply pipe 22' and the oil supply pipe 32' are provided with electromagnetic valves 25' and 35', respectively, and the electromagnetic valves 25' and 35' are connected to an operation panel not illustrated, configured such that alternate supplies of the processed water and the fuel oil can be controlled from the operation panel.

Specifically, the electromagnetic valve 35' of the fuel oil is set to open when the electromagnetic valve 25' of the processed water is closed, and conversely, the electromagnetic valve 25' of the processed water is set to open when the electromagnetic valve 35' of the fuel oil is closed. With such a configuration, a ratio of a processed water quantity and a fuel oil quantity fed to the liquid feed pipe 41' is adjusted by controlling a ratio of the number of seconds specified as an opening time of the electromagnetic valve 25' of the processed water and the electromagnetic valve 35' of the fuel oil.

Further, the surplus emulsion discharge pipe 72 is branched into the discharge pipe 72a connected to the return emulsion introduction port 59 and a discharge pipe 72b connected to the water/oil tank 20', thus whether the surplus emulsion fuel from the diesel engine 70 is returned to the emulsion generator 50 or the water/oil tank 20' is switchable by a valve.

The surplus emulsion fuel returned to the water/oil tank 20' is, as in the case of being returned to the separation tank 80 shown in Fig. 5, separated into the processed water and the fuel oil by a still-standing treatment in the water/oil tank 20'. The separated processed water and fuel oil are mixed, respectively, with the processed water supplied from the processed water treatment device 10 and the fuel oil supplied from the crude oil tank 34, incompletely emulsified in the emulsion generator 50 again, and then supplied to the diesel engine 70.

The details on control are the same as those described in the embodiment 1, thus the description thereof is omitted.

EXAMPLES

Hereinafter, the present invention will be specifically described further based on Examples, however the present invention is not limited to the following Examples.

<Test Examples 1 to 7 Characteristic analysis of processed water>

In Test Examples 1 to 7, characteristic analysis of the processed water used in the present invention was performed.

(Test Example 1 Emulsification stability of processed water)

Tap water was supplied to and passed through the soft water generation device 100 shown in Fig. 2, and then passed through the ion generator 114 and the obsidian container 116 for 30 minutes for each to obtain processed water of Example 1.

The processed water of Example 1, tap water, distilled water, and ultrapure water were each put in a beaker, and 2.7wt.%, 3wt.%, and 5wt.% of heavy oil A were separately added to the each beaker. After stirred with a stirrer, emulsion was prepared from each mixture. Emulsification condition in each sample was observed immediately after preparation, after three hours, after one day, and after three days.

As a result, in the 3wt.% samples examined immediately after preparation, an oil phase separated from a water phase was not observed only in the processed water sample, while an oil phase separated from a water phase was observed in the distilled water and ultrapure water samples.

In the 5wt.% samples, an oil phase separated from a water phase was observed in all of the processed water, distilled water and ultrapure water samples, however a thickness of the oil phase was decreased in the order of: distilled water > ultrapure water > processed water.

In the 2.7wt.% samples with the processed water, tap water and ultrapure water, examined three hours, one day, and three days after preparation, more cloudiness caused by emulsification was observed in the order of: ultrapure water > processed water > tap water, demonstrating that a stability after emulsification was higher in the order of: ultrapure water > processed water > tap water.

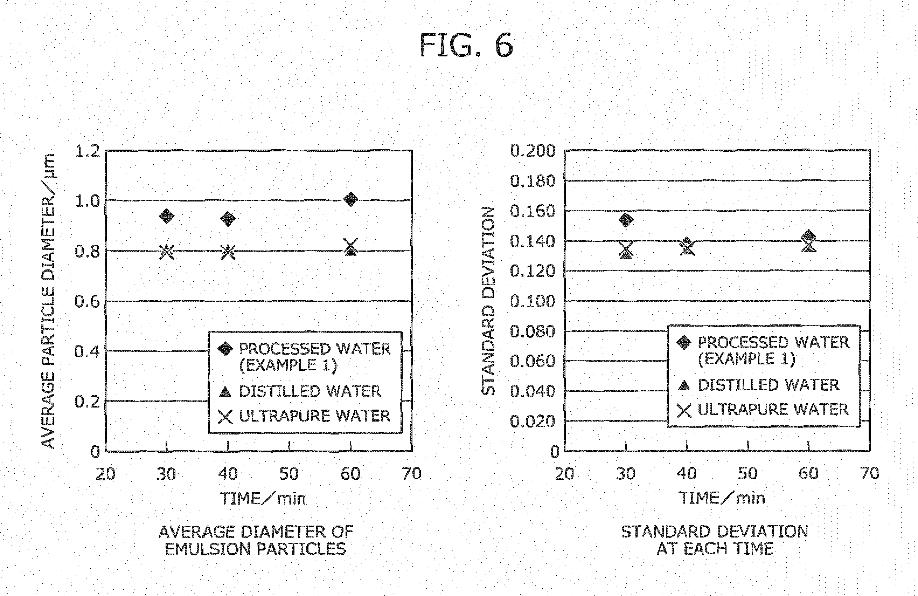

Further, in the samples prepared by adding 3wt.% of heavy oil A to the processed water of Example 1, distilled water, and ultrapure water and stirring each mixture, particle diameter of emulsion particles was measured by a particle diameter measuring device 30 minutes, 40 minutes, and 60 minutes after preparation. Average particle diameter and standard deviation were shown in Fig. 6.

As a result of Fig. 6, when one hour had passed after preparation, there was little difference in variation in the particle diameter among the processed water, distilled water, and ultrapure water. The average particle diameter of emulsion particles was slightly smaller in the distilled water and ultrapure water samples than the processed water sample, however the difference was negligible.

(Test Example 2 Surface tension of processed water treated with different conditions)

Tap water was supplied to and passed through the soft water generation device 100 shown in Fig. 2, and then circulated in the ion generator 114 for 30 minutes, 1 hour, and 3 hours to obtain processed water of Examples 2 to 4. Tap water was supplied to and passed through the soft water generation device 100 shown in Fig. 1, and then circulated in the obsidian container 116 for 30 minutes, 1 hour, 3 hours, 4 hours, and 5 hours to obtain processed water of Examples 5 to 9.

The processed water of Examples 2 to 9 and ultrapure water were measured for surface tension under a sample temperature condition of 26.0°C at the time of measurement.

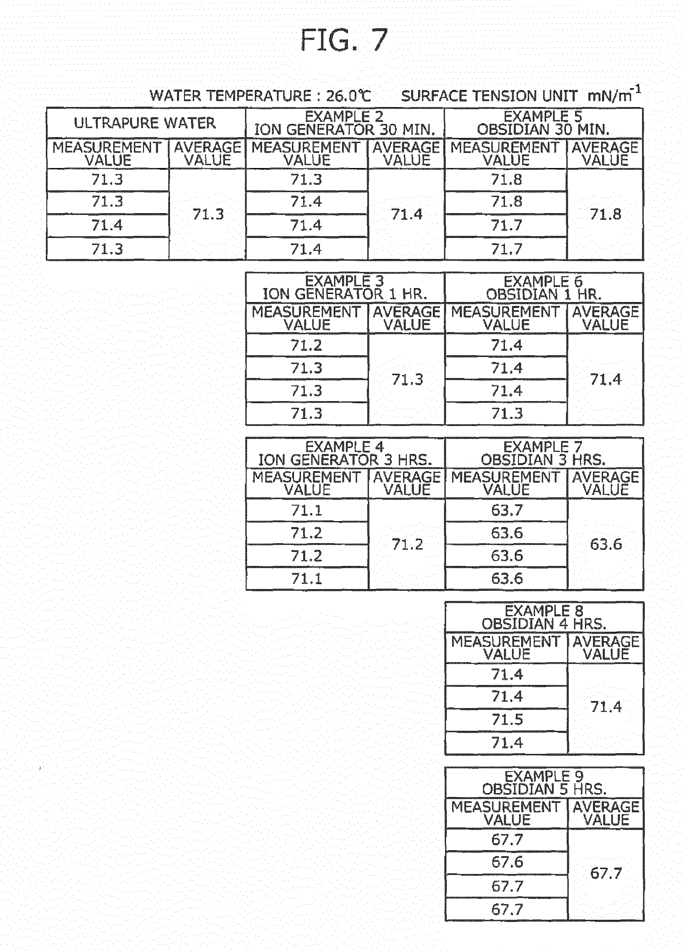

A result is shown in Fig. 7. From the result of Fig. 7, the processed water of Examples 2 to 4, circulated in the ion generator 114 for 30 minutes, 1 hour, and 3 hours, and the processed water of Examples 5, 6, and 8, circulated in the obsidian container 116 for 30 minutes, 1 hour, and 4 hours, showed the same level of surface tension as ultrapure water.

(Test Example 3 Surface tension of processed water treated with different conditions)

Tap water was supplied to and passed through the soft water generation device 100 shown in Fig. 2, and then passed through the obsidian container 116 for 5 hours to obtain processed water of Example 10.

Further, tap water was supplied to and passed through the soft water generation device 100 shown in Fig. 1, and then passed through both the ion generator 114 and the obsidian container 116 to obtain processed water of Example 11.

The processed water of Examples 10 and 11, ultrapure water, raw water (tap water) used for preparing Examples 10 and 11, and surfactant-added tap water in which a surfactant was added to the raw water (tap water) were measured for surface tension at a sample temperature of 26.0°C at the time of measurement.

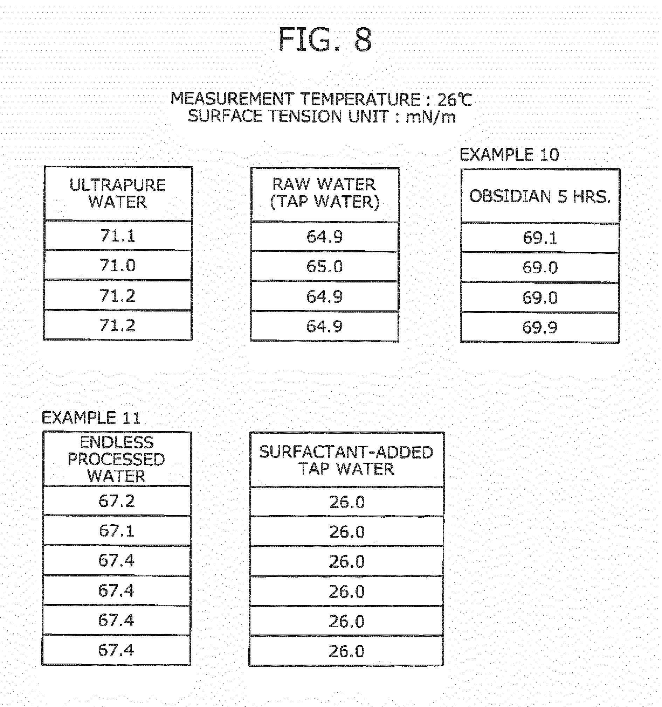

A result was shown in Fig. 8. From the result of Fig. 8, the processed water of Examples 10 and 11 showed a value of surface tension higher than the raw water, but lower than the ultrapure water. The surfactant-added tap water showed a value of surface tension significantly lower than other samples. The processed water of Examples 10 and 11 showed a value of surface tension similar to the ultrapure water and the raw water, but significantly higher than the surfactant-added tap water.

From the results of Figs. 7 and 8, the processed water of Examples 2 to 11 showed a value of surface tension close to the ultrapure water, demonstrating that the processed water is extremely clean water.

(Test Example 4 Zeta potential of emulsion)

Heavy oil A was added to the processed water of Example 1 prepared in Test Example 1, ultrapure water, ion exchange water passing through an anion exchange resin, and distilled water, and each mixture was stirred to obtain emulsion of each sample. Zeta potential of these emulsion samples was measured by using a zeta potential measuring device.

A measurement result is shown in Table 1.

[Table 1]

|  | Ultrapure water | Ion exchange water | Distilled water | Processed water |
|---|---|---|---|---|
| Zeta potential [mV] | 21.2 | 20.6 | 20.3 | -33.0 |

From a result of Table 1, zeta potential of the processed water was 33mV expressed by an absolute value, and there was no significant difference from others, however a particle surface charge of the processed water was negative, while a particle surface charge of the other samples was positive. This demonstrated that negative ions existed in the processed water.

(Test Example 5 Ion chromatograph)

The processed water of Example 1 prepared in Test Example 1 and raw water (tap water) of the processed water were subjected to an ion chromatograph method for analyzing anion and an ion chromatograph method for analyzing cation by using an ion chromatograph.

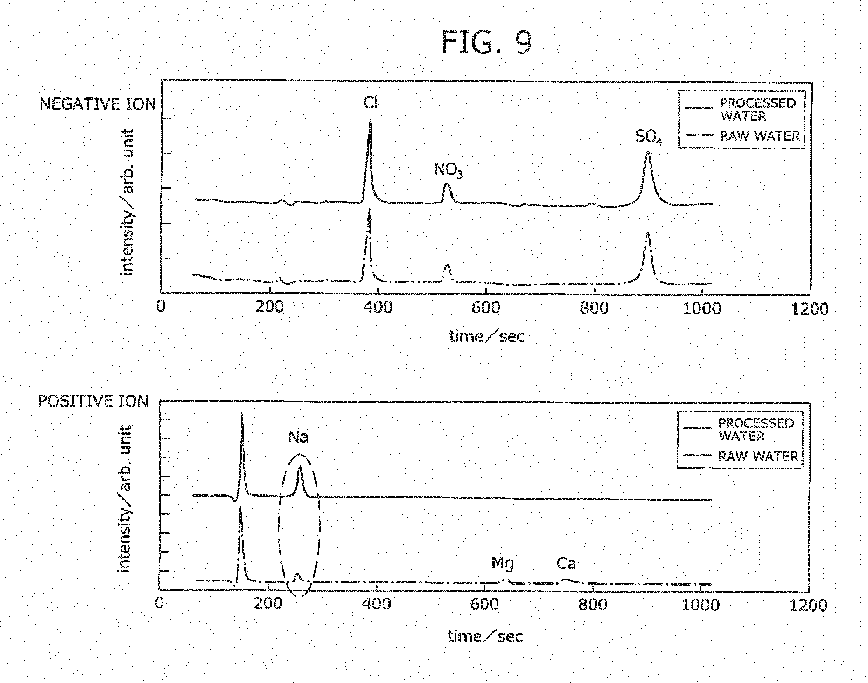

A measurement result is shown in Fig. 9. In Fig. 9, an upper part in each graph shows a measurement result of the processed water, while a lower part shows a measurement result of the raw water.

From the result of Fig. 9, in the processed water of Example 1, Mg ions and Ca ions were removed and Na ions are increased fourfold as compared to the raw water (tap water).

(Test Example 6 Surface activity measuring test of processed water)

Tap water was supplied to and passed through the soft water generation device 100 shown in Fig. 1, and then passed through the ion generator 114 and the obsidian container 116 sequentially for 5 minutes for each to obtain processed water of Comparative Example 1, or sequentially for 15 minutes for each to obtain processed water of Example 12.

To each of the sample water thus prepared and tap water (raw water), 2wt.% of salad oil (triglyceride of oleic acid) was added, and each mixture was shaken and stirred for one minute. After left for 5 minutes, the samples were measured for a $^1$H-NMR spectrum at a measurement temperature of 22°C and a measurement frequency of 400MHz using a Fourier-transform nuclear magnetic resonance device (FT-NMR, Model JNM-EX400, manufactured by JEOL Ltd.) to calculate a quantity of the salad oil dissolved in the each sample water. As a reference matter for concentration measurement, 1mMol of TSP-d$_4$ (trimethylsilyl propionic acid) was added.

The processed water of Example 12 had a measurement value of 127.0, and a quantity of the salad oil dissolved in the water is 20.06mMol, showing that 2.5 times more salad oil was dissolved as compared to the tap water. In contrast, the processed water of Comparative Example 1 had a measurement value of 74.9, and a quantity of the salad oil dissolved in the water is 11.83mMol, showing that 1.5 times more salad oil was dissolved as compared to the tap water.

(Test Example 7 Measuring test of dissolved oxygen quantity, etc.)

In accordance with Drinking Water Testing Methods (2011 Edition), pH, dissolved oxygen quantity, Na ion concentration, and oxidation-reduction potential were measured with the following samples: the processed water of Example 1 in which tap water (city water supply in Ueda city, Japan) was supplied to and passed through the soft water generation device 100 shown in Fig. 2, and then circulated in the ion generator 114 and in the obsidian container 116 for 30 minutes for each; the processed water of Example 2 in which tap water (city water supply in Ueda city) was supplied to and passed through the soft water generation device 100 shown in Fig. 2, and then circulated in the ion generator 114 for 30 minutes; the processed water of Example 5 in which tap water (city water supply in Ueda city) was supplied to and passed through the soft water generation device 100 shown in Fig. 1, and then circulated in the obsidian container 116 for 30 minutes; processed water of Comparative Example 2 in which tap water (city water supply in Ueda city) was supplied to and passed through the soft water generation device 100 shown in Fig. 2; and the tap water (city water supply in Ueda city) of Comparative Example 3 as raw water of the processed water of Examples 1, 2, and 5, and Comparative Example 2.

A result is shown in Table 2.

[Table 2]

| | pH | Dissolved oxygen [mg/L] | Na ion [mg/L] | Oxidation-reduction potential [mV] |
|---|---|---|---|---|
| Example 1 | 7.5 (13.9°C) | 13 | 32 | 305 |
| Example 2 | 7.6 (14.2°C) | 12 | 30 | 297 |
| Example 5 | 7.5 (13.9°C) | 13 | 32 | 240 |
| Comparative Example 2 | 7.9 (23.9°C) | 8.0 | 36 | 668 |
| Comparative Example 3 | 7.9 (23.5°C) | 7.6 | 9.2 | 688 |

A saturation dissolved oxygen quantity of pure water is 10.2mg/L under a condition of 1 atom and 13°C, 9.98mg/L under a condition of 1 atom and 14°C, 8.38mg/L under a condition of 1 atom and 23°C, and 8.25mg/L under a condition of 1 atom and 24°C.

Therefore, dissolved oxygen quantities in Comparative Examples 2 and 3 showed slightly lower values than the saturation dissolved oxygen quantity of pure water. In contrast, dissolved oxygen quantities in all of Examples 1, 2 and 5 showed higher values than the saturation dissolved oxygen quantity of pure water, demonstrating that the processed water of the present invention dissolved more oxygen than the saturation dissolved oxygen quantity of pure water.

(Discussion on Test Examples 1 to 7)

The processed water applied to Examples of the present invention was more easily emulsified than distilled water and ultrapure water and showed a zeta-potential value with a negative sign. Further, Mg ions and Ca ions were not contained, while Na ions were increased.

From these results, it was found that Mg ions and Ca ions that bind to an oil component were absent in the processed water, thus when the processed water and the oil were mixed, a fatty acid was liberated by hydrolysis of a triglyceride contained in the oil and reacts with Na ions to produce a fatty acid sodium salt as a surfactant.

Further, the processed water applied to Examples of the present invention had surface tension close to that of ultrapure water. However, it was found that, despite having high surface tension, the processed water had a special property, namely that, when mixed with oil without adding a surfactant separately, the processed water exhibited an ability of being emulsified with the oil by synthesizing a surfactant by itself.

Further it was found that the processed water applied to Examples of the present invention dissolved more oxygen than the saturation dissolved oxygen quantity of pure water. Dissolved oxygen can be a factor for improving combustion efficiency of the emulsion fuel prepared by emulsifying with the fuel oil.

(Test Example 8 Heat generation quantity of emulsion fuel)

In the present Test Example, the emulsion fuel according to the Example of the present invention was measured for a heat generation quantity.

The processed water of Example 1 obtained in Test Example 1 and heavy oil A were mixed in a beaker of 300ml at a predetermined ratio (mass ratio) and stirred at 200 to 400rpm with a propeller-type stirrer. A sample obtained by stirring was enclosed in a capsule and ignited in a sealed container filled with the air to measure a heat generation quantity. Measurements were performed seven times in each sample.

Using a heat generation quantity A (kJ/kg) of water-free heavy oil A, a measurement value B (kJ/kg) of a heat generation quantity of emulsion, and a mass ratio a of the heavy oil A in the emulsion, an increase rate C of a heat generation quantity caused by processed water was calculated by the following formula.

$$C = B / (A \times a)$$

As a result, it was found that an average increase rate was 0.071 when a mass ratio of the processed water in the emulsion was 30%, an average increase rate was 0.126 when 40%, an average increase rate was 0.237 when 50%, and an average increase rate was 0.275 when 60%, thus a heat generation quantity was improved by 20% or more by mixing the processed water into the emulsion by 50% or more for emulsification.

(Test Example 9 Operation test of generator)

By using the emulsion fuel supply device 1 of the embodiment, the emulsion fuel was supplied to a compact generator and a diesel generator, and operation tests of the compact generator and the diesel generator were performed.

As a result, a power generating time of the compact generator (load: two blowers: 4.3A) with 40ml of gasoline was 188 seconds, while a power generating time of the compact generator (load: two blowers: 4.3A) with the emulsion fuel of the present invention in which 2ml of the processed water was added to 40ml of gasoline was 266 seconds (extended by 41%).

Further, a power generating time of the diesel generator (load: seven projectors: 30A) with 100ml of heavy oil A was 129 seconds, while a power generating time of the diesel generator (load: seven projectors: 30A) with the emulsion fuel of the present invention in which 40ml of the processed water was added to 100ml of heavy oil A was 234 seconds (extended by 81%).

From the above, it was found that when the generators were operated with the emulsion fuel of the present invention, the generators could be operated for a longer time with the same quantity of the fuel oil as compared to the case where the generators were operated with the fuel oil only. As such, it was found that the fuel oil could be saved by 41% or more by using the emulsion fuel of the present invention.

Further, after the operation tests of the generators were continued for one year, there was no failure, such as breakdown, rusting, and shortened lifetime of the generators, in the compact generator and the diesel generator.

REFERENCE SIGNS LIST

1, 1': Emulsion fuel supply devices
10: Processed water treatment device
20: Processed water tank
20': Water/oil tank
21, 31: Introduction pipes
21a, 31a: Valves
22, 22': Water supply pipes
23, 33: Ball taps
25, 25', 35': Electromagnetic valves
27, 37: Flow rate control valves
28, 38: Flow rate sensors
30: Fuel oil tank
32. 32': Oil supply pipes
33': Float
34: Crude oil tank
36, 42: Filters
40, 40': Liquid feed parts
41, 41': Liquid feed pipes
43: Scale
50: Emulsion generator
51, 54, 57: Housings
51a, 58b: Connection parts
52, 55, 58: Large-diameter spaces
53, 56: Closing parts
53a, 56a: Fine holes
59: Return emulsion introduction port
60: Oxygen gas cylinder
61: Oxygen introduction pipe
62: Electromagnetic valve
63: Flow rate measuring instrument
70: Diesel engine
71: Supply pipe
73: Air suction port
76: Pump
100: Soft water generation device

110: First soft water generator
112: Second soft water generator
114: Ion generator
116: Obsidian container
118a, 118b, 118c: Communication pipes
120: Water supply pipe
122: Communication pipe
124: Inlet open/close valve
126: Check valve
128: Discharge pipe
130: Outlet open/close valve
132: Ion exchange resin
140: Surface tension increasing device

**Claims**

1. An emulsion fuel supply device (1) for supplying an emulsion fuel having an aqueous phase and an oil phase of a fuel oil to a combustion apparatus (70), the device comprising:

   a processed water generation device (10) for producing processed water by removing, from raw water, Ca ions and Mg ions contained in the raw water and allowing to remain or adding Na ions in the raw water;
   a tank (20, 30) for storing the processed water supplied from the processed water generation device and the fuel oil;
   a merging section for merging the fuel oil supplied from the tank and the processed water supplied from the tank at a predetermined flow rate ratio;
   an emulsion generation section (50) for producing the emulsion fuel from a mixture of the fuel oil and the processed water merged by the merging section; and
   a supply section for supplying the emulsion fuel produced by the emulsion generation section to the combustion apparatus, wherein:
   the emulsion generation section (50) comprises a plurality of dispersion parts each comprising fine hole parts comprising a pair of fine holes (53a) including through-holes with small diameter and a cylindrical large-diameter part continuously installed downstream of the fine hole parts, the plurality of dispersion parts being continuously connected to each other in series; and said through-holes are inclined relative to an extended direction of the emulsion generation section, wherein the through-holes are obliquely formed so as to approach each other toward a downstream side.

2. The emulsion fuel supply device according to claim 1, wherein:

   the tank (80) is a single tank storing the processed water and the fuel oil, comprising a water supply pipe (82) comprising a liquid suction port arranged near a bottom part of the tank and an oil supply pipe (83) comprising a liquid suction port attached on a float floating on the surface of a liquid stored in the tank; and
   the merging section alternately performs a supply of the processed water from the water supply pipe and a supply of the fuel oil from the oil supply pipe to merge the fuel oil and the processed water.

3. The emulsion fuel supply device according to claim 1, wherein:

   the tank comprises a water tank (20) for storing the processed water supplied from the processed water generation device and a fuel oil tank (30) for storing the fuel oil, formed as a separate part from the water tank;
   the tank comprises an in-tank liquid height adjusting device (23,33) for adjusting the difference between the height from a bottom surface of the fuel oil tank to a liquid surface of the fuel oil and the height from a bottom surface of the water tank to a water surface of the processed water to be within a predetermined range; and
   the merging section merges the fuel oil supplied from the fuel oil tank and the processed water supplied from the water tank with a predetermined flow rate ratio.

4. The emulsion fuel supply device according to claim 3, wherein:

   the water tank and the fuel oil tank are arranged at a position higher than the combustion apparatus;

a supply passage (22, 32) for the processed water and the fuel oil from the water tank and the fuel oil tank to the emulsion generation section is a pump-less passage without a pump; and

the fuel oil and the processed water are supplied to the emulsion generation section by gravity caused by the height difference between the water tank and the fuel oil tank, and the combustion apparatus, and pressure caused by a pump (76) provided in the combustion apparatus.

5. The emulsion fuel supply device according to claim 1, wherein the emulsion generation section comprises:
an introduction port (59) for returning surplus fuel discharged from the combustion apparatus to the large-diameter part of the emulsion generation section, the introduction port being installed on a downstream side of the most upstream fine hole parts.

6. The emulsion fuel supply device according to any of claims 1 to 5, wherein the processed water generation device comprises:

a soft water generation device (110, 112) for producing soft water from raw water, comprising an ion exchanger for removing Ca ions, Mg ions, and Fe ions from the raw water and adding Na ions in the raw water, a tourmaline container for storing tourmaline, and an obsidian container (116) for storing obsidian;
a surface tension increasing section (140) comprising an introduction pipe for introducing the soft water produced in the soft water generation device (110) and a circulation device for circulating the soft water introduced from the introduction pipe into at least one of the tourmaline container and the obsidian container for 30 minutes or more; and
a processed water supply section for supplying processed water having passed through the surface tension increasing section to the water tank.

7. The emulsion fuel supply device according to claim 1, wherein an air suction port (73) of the combustion apparatus is connectable to a gas supply quantity adjusting section for adjusting a supply quantity of gas to the combustion apparatus within a range of zero to a misfiring air quantity as fuel oil being supplied, beyond which a misfire is caused when a water-free fuel oil is supplied, and an oxygen gas supply section for supplying oxygen gas.

8. The emulsion fuel supply device according to claim 1, wherein the merging section comprises a section for alternately performing a supply of the processed water from the tank (20, 30) to the emulsion generation section and a supply of the fuel oil from the tank to the emulsion generation section.

9. An emulsion fuel supply method for supplying an emulsion fuel having an aqueous phase and an oil phase of a fuel oil to a combustion apparatus, the method comprising:

a processed water generation step for producing processed water by removing, from raw water, Ca ions and Mg ions contained in the raw water and allowing to remain or adding Na ions in the raw water;
a merging step for merging the fuel oil supplied from a tank storing the processed water produced in the processed water generation step and the fuel oil, and the processed water supplied from the tank at a predetermined flow rate ratio;
an emulsion generation step for producing the emulsion fuel by supplying a mixture of the fuel oil and the processed water merged in the merging step to an emulsion generation section comprising a plurality of dispersion parts, each comprising fine hole parts comprising a pair of fine holes including through-holes with small diameter and a cylindrical large-diameter part continuously installed downstream of the fine hole parts, the plurality of the dispersion parts being continuously connected to each other in series, the the through-holes being inclined relative to an extended direction of the emulsion generation section, wherein said through-holes are obliquely formed so as to approach each other toward a downstream side; and
a supply step for supplying the emulsion fuel produced in the emulsion generation step to the combustion apparatus.

10. The emulsion fuel supply method according to claim 9, wherein, in the merging step, the processed water and the fuel oil are merged by alternately performing a supply from a water supply pipe comprising a suction port arranged near a bottom part of the tank and a supply from an oil supply pipe comprising a suction port attached on a float floating on the surface of a liquid stored in the tank.

11. The emulsion fuel supply method according to claim 9, wherein:

before the merging step, the emulsion fuel supply method comprises an in-tank liquid height adjusting step for adjusting the difference between the height from a bottom surface of a water tank storing the processed water supplied after being produced in the processed water generation step to a water surface of the processed water, and the height from a bottom surface of a fuel oil tank storing the fuel oil to a liquid surface of the fuel oil, to be within a predetermined range; and

in the merging step, the fuel oil supplied from the fuel oil tank and the processed water supplied from the water tank are merged at a predetermined flow rate ratio.

12. The emulsion fuel supply method according to claim 11, wherein, in the merging step and the emulsion generation step, the fuel oil and the processed water are supplied to the emulsion generation section by gravity caused by the height difference between the water tank and the fuel oil tank arranged at a position higher than the combustion apparatus, and the combustion apparatus, and pressure caused by a pump provided in the combustion apparatus.

13. The emulsion fuel supply method according to claim 9, wherein, in the emulsion generation step:
surplus fuel discharged from the combustion apparatus is returned to a downstream side of the most upstream dispersion part installed in the emulsion generation section.

14. The emulsion fuel supply method according to any of claims 8 to 11, wherein, in the processed water generation step, Mg ions, Ca ions, and Fe ions contained in the raw water are removed from the raw water by ion exchange, and then the raw water is allowed to pass through at least one of a tourmaline container filled with tourmaline and an obsidian container filled with obsidian to produce the processed water.

15. The emulsion fuel supply method according to claim 12, wherein, in the processed water generation step, Na ion concentration in the processed water is increased more than Na ion concentration in the raw water.

16. The emulsion fuel supply method according to claim 15, wherein, in the processed water generation step, surface tension of the processed water measured at a water temperature of 26°C is adjusted to 50mN/m or more.

17. The emulsion fuel supply method according to claim 9, wherein, in the supply step, gas is supplied to the combustion apparatus in a supply quantity within a range of zero to a misfiring air quantity as fuel oil being supplied, beyond which a misfire is caused when a water-free fuel oil is supplied.

**Patentansprüche**

1. Vorrichtung (1) zum Zuführen eines Emulsionsbrennstoffs mit einer wässrigen Phase und einer Ölphase eines Heizöls zu einer Verbrennungsvorrichtung (70), wobei die Vorrichtung umfasst:

eine Vorrichtung (10) zur Erzeugung von aufbereitetem Wasser durch Entfernen von Calonen und Mg-Ionen, die in dem Rohwasser enthalten sind, aus dem Rohwasser und Zulassen, dass Na-Ionen in dem Rohwasser zurückbleiben oder hinzugefügt werden;
einen Tank (20, 30) zum Speichern des aufbereiteten Wassers, das von der Vorrichtung zur Erzeugung von aufbereitetem Wasser zugeführt wird, und des Heizöls;
einen Vereinigungsabschnitt zum Zusammenführen des aus dem Tank zugeführten Heizöls und des aus dem Tank zugeführten aufbereiteten Wassers mit einer vorbestimmten Durchflussrate;
einen Emulsionserzeugungsabschnitt (50) zur Herstellung des Emulsionsbrennstoffs aus einer Mischung des Heizöls und des aufbereiteten Wassers, die durch den Vereinigungsabschnitt zusammengeführt sind; und
einen Zuführabschnitt zum Zuführen des durch den Emulsionserzeugungsabschnitt erzeugten Emulsionsbrennstoffs zu der Verbrennungsvorrichtung, wobei:

der Emulsionserzeugungsabschnitt (50) eine Vielzahl von Dispersionsteilen umfasst, die jeweils Feinlochteile umfassen, die ein paar feine Löcher (53a) einschließlich Durchgangslöcher mit kleinem Durchmesser und einen zylindrischen Teil mit großem Durchmesser aufweisen, der kontinuierlich stromabwärts der Feinlochteile installiert ist, wobei die Vielzahl von Dispersionsteilen kontinuierlich in Reihe miteinander verbunden ist; und
die Durchgangslöcher relativ zu einer Erstreckungsrichtung des Emulsionserzeugungsabschnitts geneigt sind, wobei die Durchgangslöcher schräg ausgebildet sind, so dass sie sich einander zu einer stromabwärts gelegenen Seite hin nähern.

2. Vorrichtung zum Zuführen von Emulsionsbrennstoff nach Anspruch 1, wobei:

   der Tank (80) ein einzelner Tank ist, der das aufbereitete Wasser und das Heizöl speichert, umfassend eine Wasserzufuhrleitung (82) mit einer Flüssigkeitssaugöffnung, die in der Nähe eines Bodenteils des Tanks angeordnet ist, und eine Ölzufuhrleitung (83) mit einer Flüssigkeitssaugöffnung, die an einem auf der Oberfläche einer in dem Tank gespeicherten Flüssigkeit schwimmenden Schwimmer befestigt ist, und
   der Vereinigungsabschnitt abwechselnd eine Zufuhr des aufbereiteten Wassers aus der Wasserzufuhrleitung und eine Zufuhr des Heizöls aus der Ölzufuhrleitung durchführt, um das Heizöl und das aufbereitete Wasser zusammenzuführen.

3. Vorrichtung zum Zuführen von Emulsionsbrennstoff nach Anspruch 1, wobei:

   der Tank einen Wassertank (20) zum Speichern des aufbereiteten Wassers, das von der Vorrichtung zum Erzeugen von aufbereitetem Wasser zugeführt wird, und einen Heizöltank (30) zum Speichern des Heizöls umfasst, der als separater Teil des Wassertanks ausgebildet ist;
   der Tank eine Flüssigkeitshöheneinstellvorrichtung (23, 33) im Tank aufweist, zum Einstellen der Differenz zwischen der Höhe von einer Bodenfläche des Heizöltanks zu einer Flüssigkeitsoberfläche des Heizöls und der Höhe von einer Bodenfläche des Wassertanks zu einer Wasseroberfläche des aufbereiteten Wassers innerhalb eines vorbestimmten Bereichs; und
   der Vereinigungsabschnitt das aus dem Heizöltank zugeführte Heizöl und das aus dem Wassertank zugeführte aufbereitete Wasser mit einer vorgegebenen Durchflussrate zusammenführt.

4. Vorrichtung zum Zuführen von Emulsionsbrennstoff nach Anspruch 1, wobei
   der Wassertank und der Heizöltank an einer höheren Position als die Verbrennungsvorrichtung angeordnet sind;
   ein Zufuhrkanal (22,32) für das aufbereitete Wasser und das Heizöl aus dem Wassertank und dem Heizöltank zum Emulsionserzeugungsabschnitt ein pumpenloser Kanal ohne Pumpe ist;
   das Heizöl und das aufbereitete Wasser durch die Schwerkraft, die durch den Höhenunterschied zwischen dem Wassertank und dem Heizöltank und der Verbrennungsvorrichtung, sowie durch den Druck, der durch eine in der Verbrennungsvorrichtung bereitgestellte Pumpe verursacht wird, dem Emulsionserzeugungsabschnitt zugeführt wird.

5. Vorrichtung zum Zuführen von Emulsionsbrennstoff nach Anspruch 1, wobei der Emulsionserzeugungsabschnitt umfasst:
   eine Einführöffnung (59) zur Rückführung von überschüssigen Brennstoff, der aus der Verbrennungsvorrichtung abgegeben wird, zu dem Teil des Emulsionserzeugungsabschnittes mit großem Durchmesser, wobei die Einführöffnung auf einer stromabwärts gelegenen Seite der am weitesten stromaufwärts liegenden feinen Lochteile installiert ist.

6. Vorrichtung zum Zuführen von Emulsionsbrennstoff nach einem der Ansprüche 1-5, wobei die Vorrichtung zur Erzeugung von aufbereitetem Wasser umfasst:

   eine Weichwassererzeugungsvorrichtung (110,112) zur Erzeugung von Weichwasser aus Rohwasser, umfassend einen Ionenaustauscher zum Entfernen von Ca-Ionen, Mg-Ionen und Fe-Ionen aus dem Rohwasser und Hinzufügen von Na-Ionen in das Rohwasser, einen Turmalinbehälter zum Speichern von Turmalin und einen Obsidianbehälter (116) zum Speichern von Obsidian;
   einen Abschnitt (140) zur Erhöhung der Oberflächenspannung, umfassend ein Einführungsrohr zum Einleiten des in der Weichwassererzeugungsvorrichtung (110) erzeugten Weichwassers und eine Zirkulationsvorrichtung zum Zirkulieren des aus dem Einführungsrohr eingeleiteten Weichwassers in mindestens einen des Turmalinbehälters und des Obsidianbehälters für 30 Minuten oder mehr; und
   einen Abschnitt zum Zuführen von aufbereitetem Wasser, das durch den Abschnitt zur Erhöhung der Oberflächenspannung in den Wassertank gelangt ist.

7. Vorrichtung zum Zuführen von Emulsionsbrennstoff nach Anspruch 1, wobei
   eine Luftansaugöffnung der Verbrennungsvorrichtung mit einem Gaszufuhrmengeneinstellabschnitt zum Einstellen einer Gaszufuhrmenge der Verbrennungsvorrichtung in einem Bereich von Null bis zu einer fehlzündenden Luftmenge während Heizöl zugeführt wird, über der bei Zufuhr eines wasserfreien Heizöls eine Fehlzündung verursacht wird, und einem Sauerstoffgaszufuhrabschnitt zum Zuführen von Sauerstoffgas verbindbar ist.

8.  Vorrichtung zum Zuführen von Emulsionsbrennstoff nach Anspruch 1, wobei
    der Vereinigungsabschnitt einen Abschnitt zum abwechselnden Durchführen einer Zufuhr des aufbereiteten Wassers aus dem Tank (29, 30) zum Emulsionserzeugungsabschnitt und einer Zufuhr des Heizöls aus dem Tank zum Emulsionserzeugungsabschnitt umfasst.

9.  Verfahren zum Zuführen von Emulsionsbrennstoff mit einer wässrigen Phase und einer Öl-phase eines Heizöls zu einer Verbrennungsvorrichtung, wobei das Verfahren umfasst:

    einen Erzeugungsschritt von aufbereitetem Wasser zur Herstellung von aufbereiteten Wasser durch Entfernen von Ca-Ionen und Mg-Ionen, die in dem Rohwasser enthalten sind, aus dem Rohwasser und Zulassen, dass Na-Ionen im Rohwasser verbleiben oder hinzugefügt werden;
    einen Vereinigungsschritt zum Zusammenführen des aus einem Tank zugeführten Heizöls, in welchem das in dem Schritt zur Erzeugung des aufbereiteten Wassers erzeugte aufbereitete Wasser und das Heizöl gespeichert wird, und des aus dem Tank zugeführten aufbereiteten Wassers mit einer vorbestimmten Durchflussrate;
    einen Emulsionserzeugungsschritt zur Herstellung des Emulsionskraftstoffes durch Zuführen einer Mischung des Heizöls und des aufbereiteten Wassers, welche in dem Vereinigungsschritt zusammengeführt wurden, zu einem Emulsionserzeugungsabschnitt, der eine Vielzahl von Dispersionsteilen umfasst, umfassend Feinlochteile umfassend ein paar feiner Löcher einschließlich Durchgangslöcher mit kleinem Durchmesser und einen zylindrischen Teil mit großem Durchmesser, der stromabwärts der Feinlochteile kontinuierlich angeordnet ist, wobei die Vielzahl der Dispersionsteile kontinuierlich miteinander in Reihe verbunden sind, die Durchgangslöcher relativ zu einer Erstreckungsrichtung des Emulsionserzeugungsabschnittes geneigt sind, wobei die Durchgangslöcher schräg ausgebildet sind, so dass sie sich einander zu einer stromabwärts gelegenen Seite hin nähern; und
    einen Zufuhrschritt zum Zuführen des in dem Emulsionserzeugungsschritt erzeugten Emulsionskraftstoffes zu der Verbrennungsvorrichtung.

10. Verfahren zum Zuführen von Emulsionsbrennstoff nach Anspruch 9, wobei in dem Vereinigungsschritt das aufbereitete Wasser und das Heizöl zusammengeführt werden, indem abwechselnd eine Zufuhr von einer Wasserzufuhrleitung, die eine Ansaugöffnung aufweist, die in der Nähe eines Bodenteils des Tanks angeordnet ist, und eine Zufuhr einer Ölzufuhrleitung, die eine Ansaugöffnung aufweist, die an einem auf der Oberfläche einer in dem Behälter gespeicherten Flüssigkeit befestigten Schwimmer angebracht ist, durchgeführt wird.

11. Verfahren zum Zuführen von Emulsionsbrennstoff nach Anspruch 9, wobei vor dem Vereinigungsschritt das Verfahren zum Zuführen von Emulsionsbrennstoff einen Flüssigkeitshöheneinstellschritt im Tank umfasst, zum Einstellen der Differenz zwischen der Höhe von einer Bodenfläche eines Wassertanks, der das aufbereitete Wasser speichert, dass nach der Erzeugung in dem Erzeugungsschritt von aufbereitetem Wasser zugeführt wird, zu einer Wasseroberfläche des aufbereiteten Wassers, und der Höhe von einer Bodenfläche eines Heizöltanks, der das Heizöl speichert, zu einer Flüssigkeitsoberfläche des Heizöls, innerhalb eines vorbestimmten Bereichs; und
    in dem Vereinigungsschritt, das von dem Heizöltank zugeführte Heizöl und das aus dem Wassertank zugeführte aufbereitete Wasser in einer vorbestimmten Durchflussrate zusammengeführt wird.

12. Verfahren zum Zuführen von Emulsionsbrennstoff nach Anspruch 11, wobei in dem Vereinigungsschritt und dem Emulsionserzeugungsschritt das Heizöl und das aufbereitete Wasser dem Emulsionserzeugungsabschnitt durch Schwerkraft zugeführt wird, die durch den Höhenunterschied zwischen dem Wassertank und dem Heizöltank, die an einer höheren Position als die Verbrennungsvorrichtung angeordnet sind, und der Verbrennungsvorrichtung erzeugt wird, und den Druck, der von einer in der Verbrennungsvorrichtung bereitgestellten Pumpe verursacht wird.

13. Verfahren zum Zuführen von Emulsionsbrennstoff nach Anspruch 9, wobei in dem Emulsionserzeugungsschritt:
    überschüssiger Brennstoff, der von der Verbrennungsvorrichtung abgegeben wird, zu einer stromabwärts gelegenen Seite des am weitesten stromaufwärts gelegenen Dispersionsteils zurückgeführt wird, das in dem Emulsionserzeugungsabschnitt angeordnet ist.

14. Verfahren zum Zuführen von Emulsionsbrennstoff nach einem der Ansprüche 8-11, wobei in dem Erzeugungsschritt von aufbereitetem Wasser in dem Rohwasser enthaltene Mg-Ionen, Ca-Ionen und Fe-Ionen aus dem Rohwasser durch Ionenaustausch entfernt werden, und anschließend das Rohwasser durch mindestens einen Turmalinbehälter, der mit Turmalin gefüllt ist, und einen Obsidianbehälter, der mit Obsidian gefüllt ist, geleitet wird, um das aufbereitete Wasser zu erzeugen.

**15.** Verfahren zum Zuführen von Emulsionsbrennstoff nach Anspruch 12, wobei in dem Schritt der Erzeugung des aufbereiteten Wassers die Na-Ionen-Konzentration im aufbereiteten Wasser stärker erhöht wird als die Na-Ionen-Konzentration im Rohwasser.

**16.** Verfahren zum Zuführen von Emulsionsbrennstoff nach Anspruch 15, wobei in dem Schritt der Erzeugung des aufbereiteten Wassers die Oberflächenspannung des aufbereiteten Wassers, gemessen bei einer Wassertemperatur von 26 °C, auf 50 mN/m oder mehr eingestellt wird.

**17.** Verfahren zum Zuführen von Emulsionsbrennstoff nach Anspruch 1, wobei in dem Zufuhrschritt der Verbrennungsvorrichtung Gas in einer Zufuhrmenge im Bereich von Null bis zu einer Fehlzündungsluftmenge zugeführt wird, während Heizöl zugeführt wird, jenseits deren eine Fehlzündung auftritt, wenn ein wasserfreies Heizöl zugeführt wird.

## Revendications

**1.** Dispositif de fourniture de combustible émulsionné (1) pour fournir un combustible émulsionné ayant une phase aqueuse et une phase huileuse d'un mazout à un appareil de combustion (70), le dispositif comprenant :

un dispositif de production d'eau traitée (10) pour produire de l'eau traitée en éliminant de l'eau brute des ions Ca et des ions Mg contenus dans l'eau brute et en autorisant à rester ou en ajoutant des ions Na dans l'eau brute ;
un réservoir (20, 30) pour stocker l'eau traitée fournie à partir du dispositif de production d'eau traitée et le mazout ;
une section de fusion pour fusionner le mazout fourni depuis le réservoir et l'eau traitée fournie depuis le réservoir à un rapport de débit prédéterminé ;
une section de production d'émulsion (50) pour produire le combustible émulsionné à partir d'un mélange du mazout et de l'eau traitée fusionnés par la section de fusion ; et
une section de fourniture pour fournir le combustible émulsionné produit par la section de génération d'émulsion à l'appareil de combustion, dans lequel :

la section de production d'émulsion (50) comprend une pluralité de parties de dispersion comprenant chacune des parties de trou fin comprenant une paire de trous fins (53a) comprenant des trous traversants de petit diamètre et une partie cylindrique de grand diamètre installée de manière continue en aval des parties de trou fin, la pluralité de parties de dispersion étant connectées de manière continue les unes aux autres en série ; et
lesdits trous traversants sont inclinés par rapport à une direction étendue de la section de production d'émulsion, dans lequel les trous traversants sont formés obliquement de manière à se rapprocher les uns des autres vers un côté aval.

**2.** Dispositif de fourniture de combustible émulsionné selon la revendication 1, dans lequel :

le réservoir (80) est un réservoir unique stockant l'eau traitée et le mazout, comprenant un tuyau de fourniture d'eau (82)
comprenant un orifice d'aspiration de liquide agencé à proximité d'une partie inférieure du réservoir et un tuyau de fourniture d'huile (83)
comprenant un orifice d'aspiration de liquide fixé sur un flotteur flottant sur la surface d'un liquide stocké dans le réservoir ; et
la section de fusion effectue alternativement une fourniture de l'eau traitée à partir du tuyau de fourniture d'eau et une fourniture du mazout à partir du tuyau de fourniture d'huile pour fusionner le mazout et l'eau traitée.

**3.** Dispositif de fourniture de combustible émulsionné selon la revendication 1, dans lequel :

le réservoir comprend un réservoir d'eau (20) pour stocker l'eau traitée fournie par le dispositif de production d'eau traitée et un réservoir de mazout (30) pour stocker le mazout, formé en tant que pièce séparée du réservoir d'eau ;
le réservoir comprend un dispositif (23, 33) de réglage de hauteur de liquide dans le réservoir pour ajuster la différence entre la hauteur à partir d'une surface inférieure du réservoir de mazout jusqu'à une surface de liquide du mazout et la hauteur à partir d'une surface inférieure du réservoir d'eau jusqu'à une surface d'eau de l'eau traitée pour être dans une plage prédéterminée ; et

**25**

la section de fusion fusionne le mazout fourni par le réservoir de mazout et l'eau traitée fournie par le réservoir d'eau avec un rapport de débit prédéterminé.

4. Dispositif de fourniture de combustible émulsionné selon la revendication 3, dans lequel :

le réservoir d'eau et le réservoir de mazout sont agencés à une position supérieure à celle de l'appareil de combustion ;
un passage de fourniture (22, 32) pour l'eau traitée et le mazout provenant du réservoir d'eau et du réservoir de mazout vers la section de production d'émulsion est un passage dépourvu de pompe sans pompe ; et
le mazout et l'eau traitée sont fournis à la section de production d'émulsion par gravité provoquée par la différence de hauteur entre le réservoir d'eau et le réservoir de mazout, et l'appareil de combustion, et la pression provoquée par une pompe (76) fournie dans l'appareil de combustion.

5. Dispositif de fourniture de combustible émulsionné selon la revendication 1, dans lequel la section de production d'émulsion comprend :
un orifice d'introduction (59) pour renvoyer l'excédent de combustible déchargé de l'appareil de combustion vers la partie de grand diamètre de la section de production d'émulsion, l'orifice d'introduction étant installé du côté aval des parties de trou fin les plus en amont.

6. Dispositif de fourniture de combustible émulsionné selon l'une quelconque des revendications 1 à 5, dans lequel le dispositif de production d'eau traitée comprend :

un dispositif de production d'eau douce (110, 112) pour produire de l'eau douce à partir d'eau brute, comprenant un échangeur d'ions pour éliminer les ions Ca, les ions Mg et les ions Fe de l'eau brute et ajouter des ions Na dans l'eau brute, un conteneur de tourmaline pour stocker de la tourmaline, et un conteneur d'obsidienne (116) pour stocker de l'obsidienne ;
une section d'augmentation de tension de surface (140) comprenant un tuyau d'introduction pour introduire l'eau douce produite dans le dispositif de production d'eau douce et un dispositif de circulation pour faire circuler l'eau douce introduite à partir du tuyau d'introduction dans au moins un des conteneurs de tourmaline et des conteneurs d'obsidienne pendant 30 minutes ou plus ; et
une section de fourniture d'eau traitée pour fournir de l'eau traitée ayant traversé la section d'augmentation de tension de surface vers le réservoir d'eau.

7. Dispositif de fourniture de combustible émulsionné selon la revendication 1, dans lequel un orifice d'aspiration d'air (73) de l'appareil de combustion peut être relié à une section d'ajustement de quantité de fourniture de gaz pour ajuster une quantité de fourniture de gaz à l'appareil de combustion dans une plage de zéro à une quantité d'air défectueuse en tant que mazout fourni, au-delà de laquelle un allumage défectueux est provoqué lorsqu'un mazout sans eau est fourni, et une section de fourniture d'oxygène gazeux pour fournir de l'oxygène gazeux.

8. Dispositif de fourniture de combustible émulsionné selon la revendication 1, dans lequel la section de fusion comprend une section pour effectuer alternativement une fourniture de l'eau traitée depuis le réservoir (20, 30) vers la section de production d'émulsion et une fourniture du mazout depuis le réservoir vers la section de production d'émulsion.

9. Procédé de fourniture de combustible émulsionné pour fournir un combustible émulsionné ayant une phase aqueuse et une phase huileuse d'un mazout à un appareil de combustion, le procédé comprenant :

une étape de production d'eau traitée pour produire de l'eau traitée en éliminant de l'eau brute des ions Ca et des ions Mg contenus dans l'eau brute et en autorisant à rester ou en ajoutant des ions Na dans l'eau brute ;
une étape de fusion pour fusionner le mazout provenant d'un réservoir stockant l'eau traitée produite dans l'étape de production d'eau traitée et le mazout, et l'eau traitée provenant du réservoir à un rapport de débit prédéterminé ;
une étape de production d'émulsion pour produire le combustible émulsionné en fournissant un mélange du mazout et de l'eau traitée fusionnés dans l'étape de fusion à une section de production d'émulsion comprenant une pluralité de parties de dispersion, comprenant chacune des parties de trous fins comprenant une paire de trous fins comprenant des trous traversants avec un petit diamètre et une partie cylindrique de grand diamètre installée de manière continue en aval des parties de petit trou, la pluralité des parties de dispersion étant connectées de manière continue les unes aux autres en série, les trous traversants étant inclinés par rapport à une direction étendue de la section de production d'émulsion, dans laquelle lesdits trous traversants sont formés obliquement de manière à se rapprocher les uns des autres vers un côté aval ; et
une étape de fourniture pour fournir le combustible émulsionné produit dans l'étape de production d'émulsion à l'appareil de combustion.

10. Procédé de fourniture de combustible émulsionné selon la revendication 9, dans lequel, lors de l'étape de fusion, l'eau traitée et le mazout sont fusionnés en effectuant alternativement une fourniture depuis un tuyau de fourniture d'eau comportant un orifice d'aspiration agencé à proximité d'une partie inférieure du réservoir et une fourniture depuis un tuyau de fourniture d'huile comprenant un orifice d'aspiration fixé sur un flotteur flottant sur la surface d'un liquide stocké dans le réservoir.

11. Procédé de fourniture de combustible émulsionné selon la revendication 9, dans lequel :

avant l'étape de fusion, le procédé de fourniture de combustible émulsionné comprend une étape d'ajustement de hauteur de liquide dans le réservoir pour ajuster la différence entre la hauteur depuis une surface inférieure d'un réservoir d'eau stockant l'eau traitée fournie après avoir été produite dans l'étape de production d'eau traitée jusqu'à une surface d'eau de l'eau traitée, et la hauteur depuis une surface inférieure d'un réservoir de mazout stockant le mazout jusqu'à une surface de liquide du mazout, pour être dans une plage prédéterminée ; et
lors de l'étape de fusion, le mazout fourni depuis le réservoir de mazout et l'eau traitée fournie depuis le réservoir d'eau sont fusionnés selon un rapport de débit prédéterminé.

12. Procédé de fourniture de combustible émulsionné selon la revendication 11, dans lequel, dans l'étape de fusion et l'étape de production d'émulsion, le mazout et l'eau traitée sont fournis à la section de production d'émulsion par gravité provoquée par la différence de hauteur entre le réservoir d'eau et le réservoir de mazout agencé dans une position supérieure à celle de l'appareil de combustion, et l'appareil de combustion, et la pression provoquée par une pompe prévue dans l'appareil de combustion.

13. Procédé de fourniture de combustible émulsionné selon la revendication 9, dans lequel, dans l'étape de production d'émulsion :
le surplus de combustible déchargé de l'appareil de combustion est renvoyé vers un côté aval de la partie de dispersion la plus en amont installée dans la section de production d'émulsion.

14. Procédé de fourniture de combustible émulsionné selon l'une quelconque des revendications 8 à 11, dans lequel, dans l'étape de production d'eau traitée, les ions Mg, les ions Ca et les ions Fe contenus dans l'eau brute sont éliminés de l'eau brute par échange d'ions, et ensuite l'eau brute est autorisée à passer à travers au moins un conteneur de tourmaline rempli de tourmaline et un conteneur d'obsidienne rempli d'obsidienne pour produire l'eau traitée.

15. Procédé de fourniture de combustible émulsionné selon la revendication 12, dans lequel, dans l'étape de production d'eau traitée, la concentration en ions Na dans l'eau traitée est augmentée plus que la concentration en ions Na dans l'eau brute.

16. Procédé de fourniture de combustible émulsionné selon la revendication 15, dans lequel, dans l'étape de production d'eau traitée, la tension de surface de l'eau traitée mesurée à une température d'eau de 26°C est ajustée à 50 mN/m ou plus.

17. Procédé de fourniture de combustible émulsionné selon la revendication 9, dans lequel, dans l'étape de fourniture, du gaz est fourni à l'appareil de combustion en une quantité de fourniture dans une plage de zéro à une quantité d'air défectueuse en tant que mazout fourni, au-delà de laquelle un allumage défectueux est provoqué lorsqu'un mazout sans eau est fourni.

# FIG. 1

EP 3 106 751 B1

FIG. 2

FIG. 3

# FIG. 4

EP 3 106 751 B1

EP 3 106 751 B1

# FIG. 5

# FIG. 6

AVERAGE DIAMETER OF
EMULSION PARTICLES

STANDARD DEVIATION
AT EACH TIME

# FIG. 7

WATER TEMPERATURE : 26.0℃     SURFACE TENSION UNIT  mN/m$^{-1}$

| ULTRAPURE WATER | | EXAMPLE 2 ION GENERATOR 30 MIN. | | EXAMPLE 5 OBSIDIAN 30 MIN. | |
|---|---|---|---|---|---|
| MEASUREMENT VALUE | AVERAGE VALUE | MEASUREMENT VALUE | AVERAGE VALUE | MEASUREMENT VALUE | AVERAGE VALUE |
| 71.3 | | 71.3 | | 71.8 | |
| 71.3 | 71.3 | 71.4 | 71.4 | 71.8 | 71.8 |
| 71.4 | | 71.4 | | 71.7 | |
| 71.3 | | 71.4 | | 71.7 | |

| EXAMPLE 3 ION GENERATOR 1 HR. | | EXAMPLE 6 OBSIDIAN 1 HR. | |
|---|---|---|---|
| MEASUREMENT VALUE | AVERAGE VALUE | MEASUREMENT VALUE | AVERAGE VALUE |
| 71.2 | | 71.4 | |
| 71.3 | 71.3 | 71.4 | 71.4 |
| 71.3 | | 71.4 | |
| 71.3 | | 71.3 | |

| EXAMPLE 4 ION GENERATOR 3 HRS. | | EXAMPLE 7 OBSIDIAN 3 HRS. | |
|---|---|---|---|
| MEASUREMENT VALUE | AVERAGE VALUE | MEASUREMENT VALUE | AVERAGE VALUE |
| 71.1 | | 63.7 | |
| 71.2 | 71.2 | 63.6 | 63.6 |
| 71.2 | | 63.6 | |
| 71.1 | | 63.6 | |

| EXAMPLE 8 OBSIDIAN 4 HRS. | |
|---|---|
| MEASUREMENT VALUE | AVERAGE VALUE |
| 71.4 | |
| 71.4 | 71.4 |
| 71.5 | |
| 71.4 | |

| EXAMPLE 9 OBSIDIAN 5 HRS. | |
|---|---|
| MEASUREMENT VALUE | AVERAGE VALUE |
| 67.7 | |
| 67.6 | 67.7 |
| 67.7 | |
| 67.7 | |

# FIG. 8

MEASUREMENT TEMPERATURE : 26℃
SURFACE TENSION UNIT : mN/m

| ULTRAPURE WATER |
|---|
| 71.1 |
| 71.0 |
| 71.2 |
| 71.2 |

| RAW WATER (TAP WATER) |
|---|
| 64.9 |
| 65.0 |
| 64.9 |
| 64.9 |

EXAMPLE 10

| OBSIDIAN 5 HRS. |
|---|
| 69.1 |
| 69.0 |
| 69.0 |
| 69.9 |

EXAMPLE 11

| ENDLESS PROCESSED WATER |
|---|
| 67.2 |
| 67.1 |
| 67.4 |
| 67.4 |
| 67.4 |
| 67.4 |

| SURFACTANT-ADDED TAP WATER |
|---|
| 26.0 |
| 26.0 |
| 26.0 |
| 26.0 |
| 26.0 |
| 26.0 |

FIG. 9

EP 3 106 751 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011122035 A

**Non-patent literature cited in the description**

- Drinking Water Testing Methods. 2011